# EUROPEAN PATENT SPECIFICATION

(11) **EP 0 404 559 B1**
(45) Date of publication and mention of the grant of the patent: **29.05.2002**
(21) Application number: 90306776.7
(22) Date of filing: 21.06.1990
(51) Int. Cl.: G06F 9/38

(54) **Multiprocessor system with multiple instruction sources**
Multiprozessorsystem mit mehrfachen Befehlsquellen
Système multiprocesseur avec des sources d'instructions multiples

(30) Priority: 22.06.1989 US 370325
(43) Date of publication of application: 27.12.1990
(60) Divisional application: 01204052.3
(73) Proprietor: SUN MICROSYSTEMS, INC., Mountain View, CA 94303 (US)
(72) Inventor: Frank, Steven, Hopkinton, Massachusetts 02148 (US); Burkhardt, Henry, III, Manchester, Massachusetts 01944 (US); Weber, Frederick D., Concord, Massachusetts 01742 (US); Lee, Linda Q., Cambridge, Massachusetts 02138 (US)
(74) Representative: Harris, Ian Richard

(56) References cited:
- EP-A- 0 264 235
- WO-A-84/01635
- WO-A-87/03394
- US-A- 4 553 203

## Description

### Background of the Invention

This invention relates generally to digital data processing methods and apparatus, and, in particular, relates to digital multiprocessor computer systems having distributed memory systems.

Multiprocessor computer systems provide multiple independent central processing units (CPUs) which can be coherently interconnected. Recent efforts in the multiprocessor field have concentrated on multiprocessor systems wherein each of a plurality of processors is equipped with a dedicated random access or cache memory unit. These multiple processors typically communicate with one another via a common system bus structure, or by signalling within a shared memory address area. Multiprocessors utilizing a common bus are referred to as shared bus systems, while those utilizing a shared memory area are termed shared address space systems.

In order to minimize transmission bottlenecks, some distributed memory systems couple individual processing units with local memory elements to form semi-autonomous processing cells. To achieve the benefits of multiprocessing, some such systems provide cell communications through utilization of hierarchical architectures. For example, United States Patent No. 4,622,631 to Frank et al. discloses a multiprocessing system in which a plurality of processors, each having an associated private memory, or cache, share data contained in a main memory element. Data within that common memory is partitioned into blocks, each of which can be owned by any one of the main memory and the plural processors. The current owner of a data block is said to have the correct data for that block.

Moreover, in recent years, a wide variety of methods and apparatus have been proposed or developed to interconnect the processors of a shared bus system multiprocessor.

One such shared bus multiprocessing computer system is disclosed in United Kingdom Patent Application No. 2,178,205, published 4 February 1987. The apparatus disclosed therein comprises multiple processors, each having its own dedicated cache memory. The cache memories of the system are connected to one another over a shared bus structure.

Certain conventional shared bus systems, however, lack adequate bandwidth to provide multiple processors with short effective access times during periods of high bus contention. ALthough a number of caching schemes have been proposed and developed for the purpose of reducing bus contention, the speed and size of many multiprocessor computers are still limited by bus saturation.

Moreover, the processing speed of a conventional bus structure is restricted by the bus length. In particular, as additional processors are interconnected in a typical shared bus system, bus length increases, as does the time required for signal transfer and processing.

Another class of interconnection systems, known as crossbar networks, avoid certain of the limitations of conventional shared bus systems. In a crossbar network, however, the path taken by a given signal cannot be uniquely specified. Additionally,

System cost increases in proportion to the square of the number of interconnected processors. These characteristics render crossbar networks generally unsuitable for multiprocessor systems.

International patent application WO84/0l6 describes digital processing apparatus which includes a target CPU, a data cache, an instruction cache and an emulator assist processor (EAP). If a predetermined field within the source instruction indexes and accesses a body of controlled information from memory, and if controlled information designates a field-to-field mapping, then a skeleton target instruction can be filled in by either selectively copying the fields of the source instruction, or otherwise computing the same. If the mapping is executed by an interposed independent processor, then overlapping of such conversion enhances throughput, the independent processor converting multi-field instructions for a CPU of a first kind to multi-field instructions for a CPU of a second kind without disrupting the logical flow or execution of either source or target instruction streams.

It is therefore an object of the invention to provide multiprocessing methods and apparatus having flexible interconnection configurations which enable enhanced processing speed.

### Summary of the Invention

In accordance with a first aspect of the invention, there is provided digital processing apparatus comprising a set of interconnected processing elements, the set of processing elements including a first processing element, the first processing element including fetch means for fetching instructions from a first instruction source, instructions fetched from the first instruction source forming an instruction stream, and execution means for executing instructions, at least one other of the processing elements including input/output processing means for processing signals received from, and transmitted to, a peripheral device, the input/output processing means including insert means, the insert means being operable to respond to selected signals from the peripheral device to generate direct memory access (DMA) control instructions and to apply those DMA control instructions as inserted instructions to the first processing element to be processed thereby to at least initiate DMA transfers with said peripheral device, the execution means processing both the instructions fetched from the first instruction source and the inserted instructions, the execution means executing the inserted instructions in the same manner as, and without affecting the sequence of, the instructions fetched from the first instruction source.

In accordance with a second aspect of the invention, there is provided a method of operating a digital data processor including a set of interconnected processing elements, the method comprising the steps of a first processing element fetching instructions in an instruction stream from a first instruction source, at least one other of said processing elements including input/output processing means for processing signals received from, and transmitted to, a peripheral device, the input/output processing means including insert means, the insert means responding to selected signals from said peripheral device to generate direct memory access (DMA) control instructions and applying those DMA control instructions as inserted instructions to the first processing element to be processed thereby to at least initiate DMA transfers

with the peripheral device; the first processing element processing both the instructions fetched from the first instruction source and the inserted instructions, the inserted instructions being executed in the same manner as, and without affecting the sequence of, the instructions fetched from the first instruction source.

The first instruction source can be a memory element, which can include an instruction cache element for storing digital values representative of instructions and program steps, or an execution unit (CEU) which includes elements for asserting signals to the instruction cache element to cause instructions to be transmitted from the instruction cache element to the CEU.

An embodiment of the invention can include an instruction pipeline for interconnecting the processors and for carrying the instructions. The insert elements can insert the inserted-instructions into the instruction pipeline.

The inserted-instructions can have the same format as the instructions from the first instruction source, including a first set of digital instruction bits for specifying selected address signals, and a second set of digital instruction bits for specifying selected command signals. Inserted-instructions having this format can include cache management instructions inserted by the instruction cache element.

The I/O processors can comprise a peripheral interface unit (XIU) for controlling signals received from, and transmitted by, a peripheral device; a graphics controller for controlling signals transmitted to a display device; and text search elements for searching data structures representative of text.

Selected processors can further include a register element for storing digital values representative of data. In this aspect of the invention, the insert elements can assert inserted-instructions to control movement of data into and out of register elements associated with the selected processors.

The inserted-instructions can be configured to cause execution of selected logical operations on digital values stored in the register elements.

Moreover, the processors can include trap elements which initiate a trap sequence in response to an applied trap signal. The insert elements include elements for generated inserted-instructions for generating the trap signal, and the resulting trap sequence can include any of a set of selected program steps. The processors can further comprise interrupt elements, responsive to an interrupt signal, for initiating an interrupt sequence. This interrupt sequence, analogous to the trap sequence, can include any of a set of selected program steps. The insert elements can incorporate elements for generating inserted-instructions adapted for initiating the interrupt sequence, or for generating a trap signal in response to an interrupt signal.

### Brief Description of the Drawings

For a fuller understanding of the nature and objects of the invention, reference should be made to the following detailed description and the accompanying drawings, in which:
FIG. 1 is a schematic diagram depicting a multiprocessor structure utilized in connection with a preferred practice of the invention;
FIG. 2 is a block diagram of an exemplary processing cell depicted in FIG. 1;
FIG. 3 depicts a further embodiment of a processing cell constructed in accordance with the invention;
FIG. 4 depicts single-cycle instructions in accordance with the invention;
FIGS. 5 and 6 show examples of instruction sequences which violate source register restrictions;
FIGS. 7-10 depict resource usage and timing for representative instructions;
FIG. 11 depicts an example of overlapped instructions associated with a trap sequence;
FIG. 12 illustrates a representative branch instruction in accordance with the invention;
FIGS. 13-19 depict examples of program code utilizing branch features in accordance with the invention;
FIG. 20 depicts an example of program code for remote execution;
FIGS. 21-23 illustrate features of traps, faults and interrupts in accordance with the invention; and
FIGS. 24-32 depict examples of program code associated with trap sequences.

### Description of Illustrated Embodiments

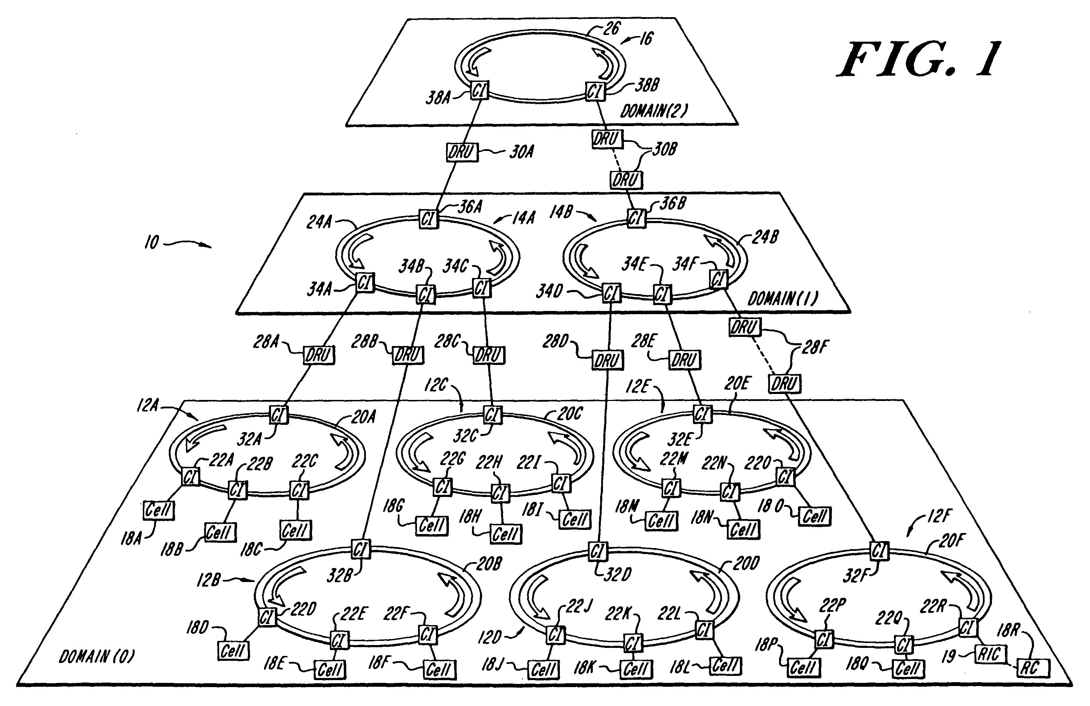

FIG. 1 depicts a multiprocessor structure 10, which can be utilized in connection with one practice of the invention. A structure of this type is further described in commonly-owned Canadian Patent 1,320,003, filed 8 November 1988, for Multiprocessor Digital Data Processing System, incorporated herein by reference. The illustrated multiprocessor structure is presented by way of example, and the invention described hereinafter can be advantageously practiced in connection with digital processing structures and systems other than that depicted in FIG. 1.

The illustrated multiprocessor structure 10 includes three information transfer domains: domain(0), domain(1), and domain(2). Each information transfer domain includes one or more domain segments, characterized by a bus element and a plurality of cell interface elements. Particularly, domain(0) of the illustrated system 10 includes six segments, designated 12A, 12B, 12C, 12D, 12E and 12F, respectively. Similarly, domain(1) includes segments 14A and 14B, while domain(2) includes segment 16.

Each segment of domain(0), i.e., segments 12A, 12B, ... 12F, comprises a plurality of processing cells. For example, as shown in the illustration, segment 12A includes cells 18A, 18B and 18C; segment 12B includes cells 18D, 18E and 18F; and so forth. Each of those cells include a central processing unit and a memory element, interconnected along an intracellular processor bus (not shown). In accord with the preferred practice of the invention, the memory element contained in each cells stores all control and data signals used by its associated central processing unit.

As further illustrated, each domain(0) segment may be characterized as having a bus element providing a communication pathway for transferring information- representative signals between the cells of the segment. Thus, illustrated segment 12A is characterized by bus 20A, segment 12B by 20B, segment 12C by 20C, and so on. As described in greater detail in commonly-owned Canadian Patent Application Serial No. 582,560, filed 8 November 1988, incorporated herein by reference, information-representative signals are passed between the cells 18A, 18B and 18C of exemplary segment 12A by way of the memory elements associated with each of those cells. Specific interfaces between those memory elements and the bus 20A are provided by cell interface units 22A, 22B and 22C, as shown. Similar direct communication pathways are established in segments 12B, 12C and 12D between their respective cells 18D, 18E, ... 18R by cell interface units 22D, 22E, ... 22R, as illustrated.

As shown in the illustration and noted above, the remaining information transfer domains, i.e., domain(1) and domain(2), each include one or more corresponding domain segments. The number of segments in each successive segment being less than the number of segments in the prior one. Thus, domain(1)'s two segments 14A and 14B number fewer than domain(0)'s six 12A, 12B ... 12F, while domain(2), having only segment 16, includes the fewest of all. Each of the segments in domain(1) and domain(2), the "higher" domains, include a bus element for transferring information-representative signals within the respective segments. In the illustration, domain(1) segments 14A and 14B include bus elements 24A and 24B, respectively, while domain(2) segment 16 includes bus element 26.

The segment buses serve to transfer information between the components elements of each segment, that is, between the segment's plural domain routing elements. The routing elements themselves provide a mechanism for transferring information between associated segments of successive domains. Routing elements 28A, 28B and 28C, for example, provide a means for transferring information to and from domain(1) segment 14A and each of domain(0) segments 12A, 12B and 12C, respectively. Similarly, routing elements 28D, 28E and 28F provide a means for transferring information to and from domain(1) segment 14B and each of domain(0) segments 12D, 12E and 12F, respectively. Further, domain routing elements 30A and 30B provide an information transfer pathway between domain(2) segment 16 and domain(1) segments 14A and 14B, as shown.

The domain routing elements interface their respective segments via interconnections at the bus elements. Thus, domain routing element 28A interfaces bus elements 20A and 24A at cell interface units 32A and 34A, respectively, while element 28B interfaces bus elements 20B and 24B at cell interface units 32B and 34B, respectively, and so forth. Similarly, routing elements 30A and 30B interface their respective buses, i.e., 24A, 24B and 26, at cell interface units 36A, 36B, 38A and 38B, as shown.

FIG. 1 illustrates further a preferred mechanism interconnecting remote domains and cells in a digital data processing system constructed in accord with the invention. Cell 18R, which resides at a point physically remote from bus segment 20F, can be coupled with that bus and its associated cells (18P and 180) via a fiber optic transmission line, indicated by a dashed line. A remote interface unit 19 provides a physical interface between the cell interface 22R and the remote cell 18R. The remote cell 18R is constructed and operated similarly to the other illustrated cells and includes a remote interface unit for coupling the fiber optic link at its remote end.

In a similar manner, domain segments 12F and 14B can be interconnected via a fiber optic link from their parent segments. As indicated, the respective domain routing units 28F and 30B each comprise two remotely coupled parts. With respect to domain routing unit 28F, for example, a first part is linked directly via a standard bus interconnect with cell interface 34F of segment 14B, while a second part is linked directly with cell interface unit 32F of segment 12F. These two parts, which are identically constructed, are coupled via a fiber optic link, indicated by a dashed line. As above, a physical interface between the domain routing unit parts and the fiber optic media is provided by a remote interface unit (not shown).

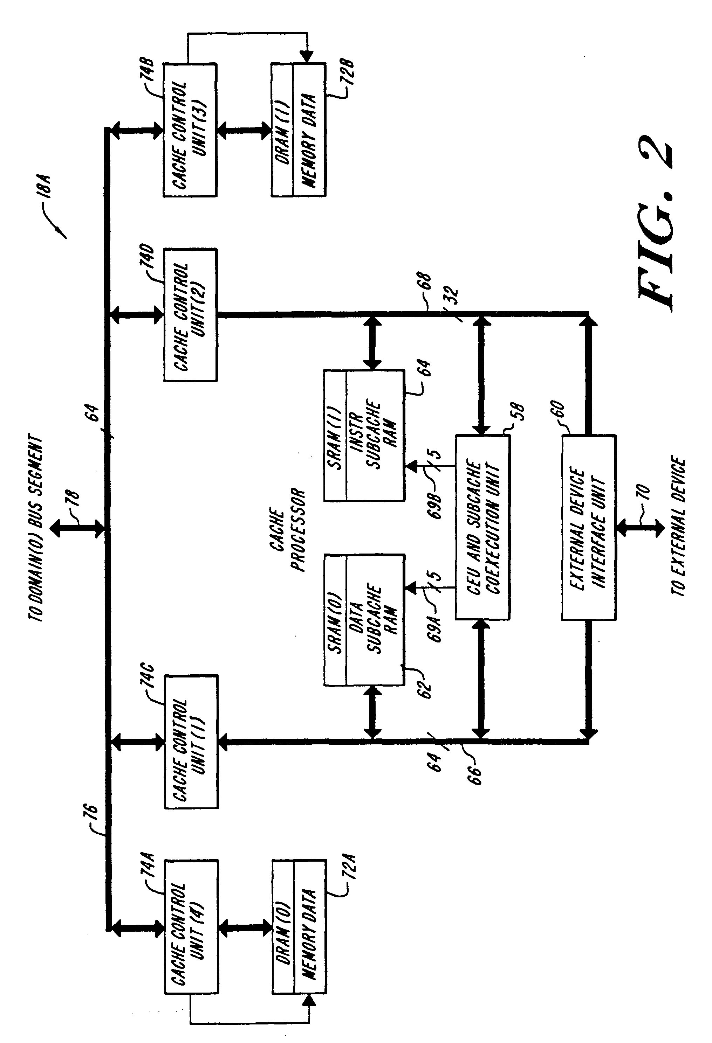

FIG. 2 depicts an embodiment of the processing cells 18A, 18B, ..., 18R of FIG. 1. The illustrated processing cell 18A includes a central processing unit 58 coupled with external device interface 60, data subcache 62 and instruction subcache 64 over processor bus 66 and instruction bus 68, respectively. Interface 60, which provides communications with external devices, e.g., disk drives, over external device bus, is constructed in a manner conventional to the art.

Processor 58 can comprise any one of several commercially available processors, for example, the Motorola 68000 CPU, adapted to interface subcaches 62 and 64, under control of a subcache co-execution unit acting through data and address control lines 69A and 69B, in a manner conventional to the art, and further adapted to execute memory instructions as described below. The processing cells are further described in commonly-owned Canadian Patent 1,320,003, filed 8 November 1988, for "Multiprocessor Digital Data Processing System," incorporated herein by reference.

Processing cell 18A further includes data memory units 72A and 72B coupled, via cache control units 74A and 74B, to cache bus 76. Cache control units 74C and 74D, in turn, provide coupling between cache bus 76 and processing and data buses 66 and 68. As indicated in FIG. 2, bus 78 provides an interconnection between cache bus 76 and the domain(0) bus segment 20A associated with the illustrated cell. Preferred designs for cache control units 74A, 74B, 74C and 74D are discussed in Canadian Patent 1,320,003, filed 8 November 1988, for "Multiprocessor Digital Data Processing System," and Canadian Patent 2,019,300 filed this same date herewith, for "Improved Multiprocessor System." The teachings of both applications are incorporated herein by reference.

In a preferred embodiment, data caches 72A and 72B include dynamic random access memory (DRAM) devices, each capable of storing up to 16 Mbytes of data. The subcaches 62 and 64 are static random access memory (SRAM) devices, the former capable of storing up to 256k bytes of data, the latter of up to 256k bytes of instruction information. As illustrated, cache and processor buses 76 and 64 provide 64-bit transmission pathways, while instruction bus 68 provides a 64-bit transmission pathway. A preferred construction of cache bus 76 is provided in Canadian Patent 1,320,003, filed 8 November 1988, for "Multiprocessor Digital Data Processing System," incorporated herein by reference.

Those skilled in the art will understand that illustrated CPU 58 can represent a conventional central processing unit and, more generally, any device capable of issuing memory requests, e.g., an I/O controller or other special purpose processing element.

The instruction execution of a processing cell herein described differs from conventional digital processing systems in several significant ways. The processing cell --e.g., 18A-- has multiple processing cells or functional units --e.g., 58, 60--that can execute instructions in parallel. Additionally, the functional units are "pipelined," to permit multiple instructions to be in progress at the same time by overlapping their execution. This pipelining is further described in Canadian Patent Application Serial No. 582,560, filed 8 November 1988, for "Multiprocessor Digital Data Processing System," incorporated herein by reference. Further description of the instructions discussed herein --including LOADS, STORES, MOVOUT, MOVB, FDIV and others-- can be found in Canadian Patent 2,019,300 filed this same date herewith, incorporated herein by reference.

A processing cell of an embodiment of the invention executes a sequence instructions fetched from memory. The context of instructions fetched from memory. The context of execution can be partially defined by the architecture, and partially defined by software. The architectural portion of the execution context can consist of a context address space, a privilege level, general registers, and a set of program counters. The context address space and privilege level determine what data in the memory system the instruction stream may reference. General registers, constructed in accordance with known engineering practice, are used for computation. These features are further described in Canadian Serial No. 582,560, incorporated herein by reference. The program counters define what portion of the instruction stream has already executed and what will be executed next, as described in greater detail hereinafter.

Two time units can be employed in specifying the timing of instructions. These units are referred to herein as "clocks" and "cycles," respectively. A clock is a unit of real-time which has duration defined by the system hardware. The processor performs an instruction fetch every cycle. A cycle takes one clock unless a "stall" occurs, in which case a cycle takes some larger integral number of clocks. The execution of instructions is described in terms of cycles and is data-independent.

Pipeline stalls can result from subcache and cache management overhead. Most LOAD and STORE operations will complete without a stall; however, any LOAD, STORE, or memory control instruction may cause a stall in order to allow the system to retrieve data from the local cache or from a remote cells. These delays are referred to herein as stalls. During a stall, the execution of other instructions does not proceed, and no new instructions are fetched. Stalls are not related to the instruction itself, but to the proximity of the related data. Stalls are measured in clocks and each stall is an integral number of clocks. Even though a CEU might stall while obtaining data from the local cache, the programming model (expressed in cycles) remains constant.

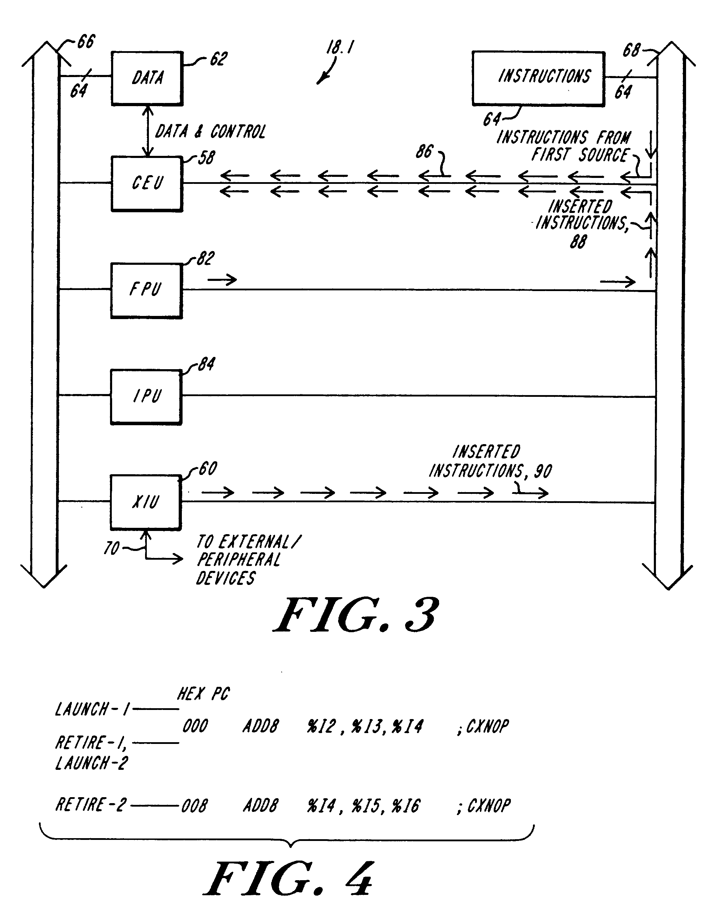

As illustrated in FIG. 3, a processing cell 18.1 in accordance with the invention can include four processing elements, also referred to herein as "functional units": the CEU 58, IPU 84, FPU 82 and XIU 60. While FIG. 3 illustrates a processing cell 18.1 having four processing elements, those skilled in the art will appreciate that the invention can be practiced in connection with a processing cell having more or fewer processing elements.

In particular, the CEU (Central Execution Unit) fetches all instructions, controls data FETCH and STORE (referred to herein as LOADS and STORES), controls instruction flow (branches), and does arithmetic required for address calculations. The IPU (Integer Processing Unit) executes integer arithmetic and logical instructions. The FPU (Floating point Processing Unit) executes floating point instructions. The XIU (eXternal I/o Unit) is a co-execution unit which provides the interface to external devices. The XIU performs DMA (Direct Memory Access operations) and programmed I/O, and contains timer registers. It executes several instructions to control programmed I/O.

The processing cell 18.1 thus comprises a set of interconnected processors 58, 60, 82 and 84, including a CEU 58 for normally processing an instruction stream including instructions from the instruction cache 64. The flow of instructions from the instruction cache 64 is indicated in FIG. 3 by dashed lines 86.

As depicted in FIG. 3, at least one of the processors --in the illustrated example, FPU 82 and XIU 60-- can assert instructions, referred to herein as "inserted-instructions", which can be executed by the CEU 58. The flow of inserted-instructions from FPU 82 to CEU 58 is indicated in FIG. 3 by dashed lines 88. Analogously, the movement of inserted-instructions from XIU 60 to CEU 58 is denoted by dashed lines 90.

Moreover, as discussed in greater detail hereinafter, these inserted-instructions can be executed by CEU 58 in the same manner as, and without affecting execution sequence of, the instructions from the instruction cache 64. Moreover, as further explained below, the inserted-instructions can have the same format as the instructions from the first instruction source, including a first set of digital instruction bits for specifying selected address signals, and a second set of digital instruction bits for specifying selected command signals. Inserted-instructions having this format can include cache management instructions inserted by the instruction cache 64 or by the cache control unit 74D depicted in FIG. 2.

While FIG. 3 depicts an instruction cache 64 as the source of instructions, alternatively, the source of instructions can be a processor or execution unit --including, under certain circumstances, the CEU 58-- adapted for asserting signals to the instruction cache element to cause instructions to be transmitted from the instruction cache element to the CEU 58.

As discussed above, the processing cell 18.1 can include an instruction pipeline, comprising instruction bus 68, for interconnecting the processors and for carrying the instructions. The processors, in turn, can incorporate hardware and software elements for inserting the inserted-instructions into the instruction pipeline.

The XIU 60 depicted in FIG. 3 can incorporate input/output (I/O) modules for handling signals 70 received from, and transmitted to, peripheral devices, also referred to herein as external devices. These I/O modules can include direct memory access (DMA) elements, which respond to selected signals from a peripheral device, to insert DMA instructions which can be processed by the CEU 58 in the same manner as, and without affecting processing sequence of, the instructions from the first instruction source. These processing sequences are discussed in greater detail hereinafter. The XIU 60 can also include graphics controller circuits, constructed in accordance with known engineering practice, for controlling signals transmitted to a display device; or conventional text search elements for searching data structures representative of text.

Each processor 58, 60, 82, 84 depicted in FIG. 3 can include registers for storing digital values representative of data and processor states, in a manner discussed in greater detail hereinafter. The inserted-instructions control movement of data into and out of the registers, and cause execution of selected logical operations on values stored in the registers.

In a preferred embodiment of the invention, the processors depicted in FIG. 3 can initiate a trap sequence in response to an applied trap signal, as explained in greater detail hereinafter. The trap sequence can be initiated by selected inserted-instructions. Analogously, the processors of the cell 18.1 depicted in FIG. 3 can include elements for initiating an interrupt sequence, and the inserted-instructions can cause entry into the interrupt sequence, or trigger a trap signal in response to an interrupt signal. These features of the invention, including specific instruction codes for triggering trap and interrupt sequences, are set forth below.

The four functional units depicted in FIG. 3 operate in parallel. The cell pipeline can launch two instructions every cycle. Some instructions, such as FMAD (floating-point multiply and add) perform more than one operation. Others, such as LD64 (load 64 bytes) generate more than one result. Each can be executing an instruction independently of the others.

Program instructions can be stored in memory in instruction pairs. Each pair consists of one instruction for the CEU or XIU and one instruction for the FPU or IPU. The former is called the CX-instruction and the latter is called the FI instruction.

The CEU can have three program counters (PCs), referred to as PC0, PC1, and PC2. PC2 is also referred to herein as the "fetch PC." From the programmer's perspective, the processing element is executing the instruction-pair pointed to by PC0, will next execute the instruction-pair designated by PC1, and is fetching the instruction-pair designated by PC2. As an instruction completes, PC0 acquires the previous value of PC1, PC1 acquires the previous value of PC2, and PC2 is updated according to the CX-instruction just executed. If that instruction was not a branch instruction, or was a conditional branch instruction whose condition was not met, PC2 is updated to the value of PC2 plus eight. If this value is not in the same segment as the previous value of PC2, the result is undefined. If that instruction was a taken branch, PC2 is updated to the target of the branch.

In each cycle, the processor logically fetches the instruction-pair designated by PC2 from memory and begins execution of both of the instructions in the pair designated by PC0, in parallel. Thus, a single instruction pair can initiate work in the CEU and IPU, the CEU and FPU, the XIU and IPU, or the XIU and FPU. Those skilled in the art will appreciate that because the functional units are pipelined, each unit can commence execution of a new instruction at each cycle, regardless of the number of cycles an instruction requires to complete. However, there are restrictions on the use of processor element or functional unit resources which affect the ordering of instructions by the compiler or programmer.

Certain instructions have effects in more than one unit. LOAD and STORE instructions, for example, involve the CEU and the unit containing the source or target registers. However, the processor can launch a LOAD or STORE for the FPU or IPU in the same cycle that it launches an execute instruction for the same unit.

The MOVB (move-between-units) instruction moves data between the registers of two units. Most inter-unit data movements require a single instruction; moving data between the FPU and IPU requires specification of MOVIN and MOVOUT instructions in a single instruction pair.

When the value of PC2 changes, the processor fetches that instruction pair. The instructions are entered in the processor pipeline, and occupy pipeline states in the order entered. Although an instruction cannot be removed from the pipeline, it can be marked as "quashed." In accordance with the invention, there are two types of quashing, referred to herein as "result-quashing" and "launch-quashing."

Result-quashing occurs during "traps." A trap is an operational sequence initiated by the trap mechanism, which is used to transfer control to privileged software in the event of interrupts and "exceptions." An exception, described in greater detail hereinafter, is a state which occurs if an instruction executing in the FPU or IPU reports a trap and any operating instruction for the same unit was launched in the cycles between that launch and the current cycle. An exception is signaled when any error is detected as the direct result of fetching or executing an instruction in the instruction stream. Exceptions include overflow of a data type, access violations, parity errors, and page faults.

A trap can be initiated in two basic ways: a fault or an interrupt. A fault is explicitly connected with the executing instruction stream. An interrupt is an event in the system which is not directly related to the instruction stream. Traps, faults, and interrupts are described in greater hereinafter.

Instructions executing at the time of a trap may be result-quashed. An instruction which is result-quashed was launched and processed by the functional unit, but does not affect the register or memory state except by reporting status in one or more special trap-status registers described below.

An instruction which is launch-quashed is handled in a manner similar to that used for no_operation (NOP) instructions. A launch-quashed instruction can only generate traps relative to fetching that instruction. All other effects of a launch-quashed instruction are nullified. If an instruction is launch-quashed at the time it reaches PC0 stage, it is not launched and does not use any resource normally used by the instruction. Launch-quashing is associated with the three execution PCs. It is possible to individually control launch-quashing for the PC0 CX and FI instructions and to control launch-quashing for the PC1 instruction pair. System software and the hardware can individually alter all three quashing controls. A trap will launch-quash certain instructions in the pipeline. Additionally, the conditional branch instructions allow the program to quash the two instruction pairs which follow it in the pipeline. This is called branch-quashing, and results in the processor launch-quashing the instructions in the branch delay. These features are described in greater detail hereinafter.

When an instruction fetch copies PC1 to PC0, it sets launch-quashing for both the CX and FI instructions depending upon the old launch-quashing state for PC1. If the just-completed CX instruction was a conditional branch which specified branch-quashing and no trap occurred, then launch-quashing is set for PC0 CX and FI and PC1 after the PCs are updated.

An instruction typically causes a processing element to read one or more source operands, operate on them in a specific fashion, and deliver a result operand. In accordance with the invention, "execute-class" instructions can be classified into three groups according to how they read their operands and deliver results. The first group causes a functional unit to read the source operands immediately, compute and deliver the result immediately. The result can be used by the next instruction pair. The second group causes a functional unit to read the source operands immediately, compute and deliver the result after some delay. The result can be used by the Nth instruction pair following the instruction, where N varies according to the instruction. The third group causes the functional unit to read some source operands immediately, compute part of the result, read other source operands after some delay, and deliver the result after some delay. The result can be used by the Nth instruction pair following the instruction, where N varies according to the instruction.

LOAD and STORE instructions have several significant characteristics. All LOAD instructions use the source address immediately and deliver one or more results after some delay. Moreover, all LOAD instructions use their CEU index-register source immediately. If a CEU or XIU register is being stored, that value is also obtained immediately. If an FPU or IPU register is being stored, that value is obtained after some delay. The STORE-64BYTE (ST64) instruction uses its CEU index-register source over the duration of the instruction, and obtains the various FPU and IPU source data after varying delays.

At each cycle the processor elements or functional units examine the appropriate instruction of the instruction pair addressed by the Program Counter (PC). An instruction within the instruction pair can be a directive to one of the two corresponding units (CEU/XIU or FPU/IPU), or indicates that there is no new work for either unit. The latter case is indicated by no-operation instruction encodings, CXNOP and FINOP. As referred to herein, an operating instruction is an instruction which is not a FINOP or CXNOP, and which is not launch-quashed. If an operating instruction is present, the appropriate unit launches that instruction. When the instruction execution is complete, the functional unit "retires" the instruction. In general, the result of an instruction is available to the instruction pair following retirement of the instruction, as shown in FIG. 4.

FIG. 4 illustrates single-cycle instructions, which are defined herein as an instruction which is retired before the next instruction-pair is considered for launching, and which has a "result delay" of zero. All other instructions are referred to as "multi-cycle instructions" and have a non-zero result delay. The result delay is the number of instruction pairs which must be present between a particular instruction and the instruction which uses the result. All other timings are expressed in terms of cycles form the launch time of the instruction; the first cycle is numbered zero.

Many instructions may take traps to indicate that the instruction did not complete successfully. The system disclosed herein provides users significant control over arithmetic traps. Other traps can be used by system software to implement features such as virtual memory, as described in Canadian Serial No. 582,560, incorporated herein by reference. As described in greater detail hereinafter, instructions report traps at well-defined trap points, which are expressed in terms of cycles completed since the launch of the instruction.

Each instruction reads its source registers at a specified time. All single-cycle and many multi-cycle instructions read all of their sources in cycle zero of execution (i.e. with a delay of zero). Certain multi-cycle instructions read one or more sources at a later time.

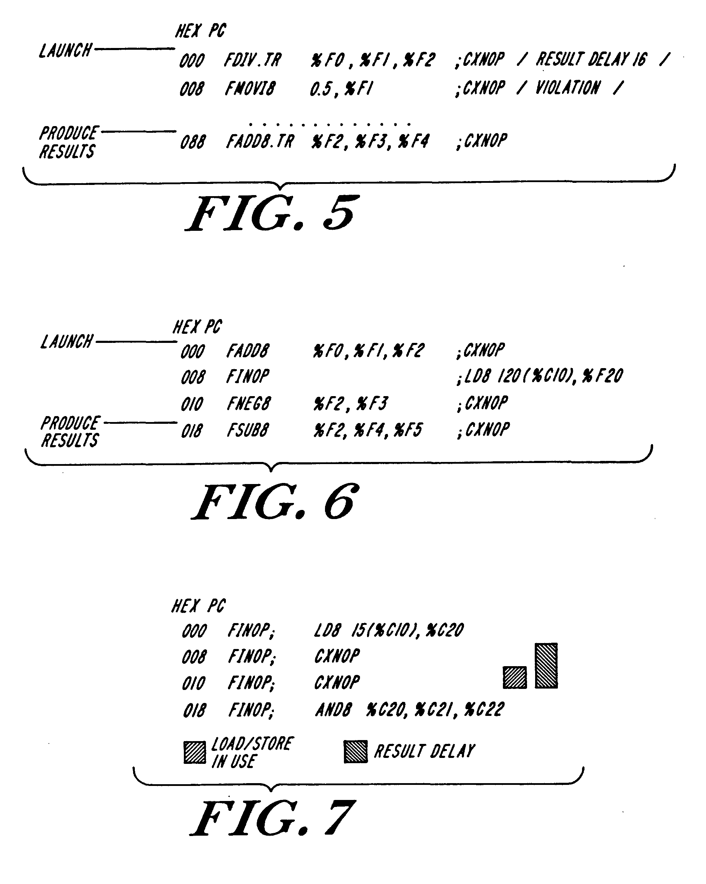

If a trap occurs, system software can take corrective action (e.g. make the page available) and restart the user program instruction stream. The program generally must not change the source registers during the time that the instruction might be affected by a fault. This property is referred to as the source register restriction. FIG. 5 depicts an example of an instruction sequence which violates this restriction.

Each functional unit utilizes a selected set of source registers. The CEU {A,B} source register, for example, is used during all CEU instructions. It provides the index register used by a LOAD or STORE, the source operands used by execute-class instructions. The FPU {A,B} source register is used during FPU execute-class instructions. It provides the first or first and second source operands used by execute class instructions. The FPU {C} source is used during FPU execute-class triad instructions. It provides the third operand used by these instructions. It is also used when the CEU accesses an FPU register with a STORE-TYPE or MOVB instruction.

Additionally, the IPU {A,B} source is used during IPU execute-class instructions. It provides the first or first and second source operands used by execute class instructions. The IPU {C} source is used when the CEU accesses an IPU register with a STORE-TYPE or MOVB instruction. The XIU {A,B} Source is used during XIU execute-class instructions. It provides the first or first and second source operands used by execute-class instructions. It is also used when the CEU accesses an XIU register with a store-class or MOVB instruction.

As described above, each instruction that produces a result has a result delay that specifies how many cycles ensue before the result is available. During the result delay, the result registers are undefined. Programs may not depend on the old value of a result register of an instruction during the result delay of that instruction. This is called the result register restriction. When an exception occurs, all launched instructions are allowed to complete before the system software handler is invoked. Thus, it is possible that the result of a multi-cycle instruction will be delivered before the defined result delay has expired. Any instruction which uses the result register of a multi-cycle instruction during the result delay of that instruction will indeterminably obtain one of the (at least two) values of that register. FIG. 6 shows a sequence that violates this restriction. The FNEG instruction attempts to depend upon the value that %f2 had before the FADD instruction. The FADD instruction will write %f2 in time for the FSUB instruction to read it. If the LD8 instruction takes a page fault, or an interrupt is signalled before the FNEG is fetched, the FADD will complete before the FNEG is launched. This program will therefore produce unpredictable results.

Each of the functional units has a number of internal resources which are used to execute instructions. These resources may only operate on one instruction at a time. At any time, each resource must be idle or in use by at most one instruction. This is called the resource restriction. Various functional units may detect violations of the resource restriction and cause a trap.

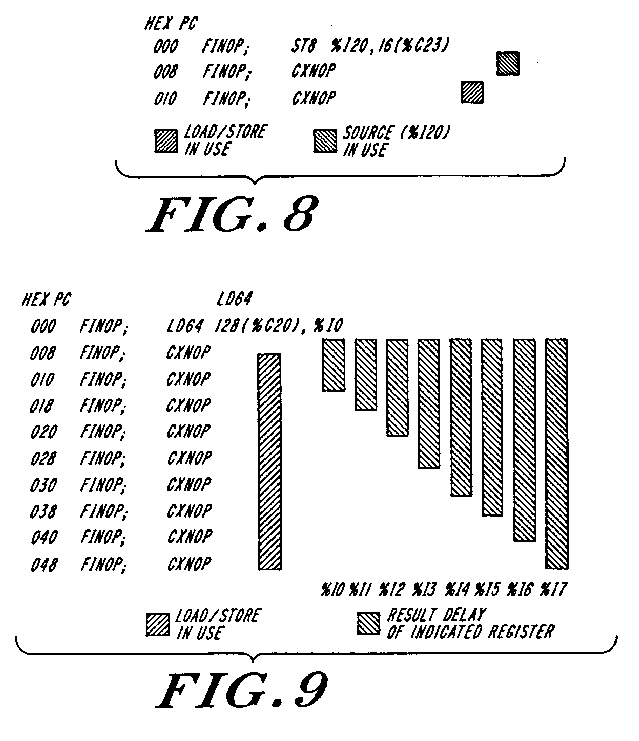

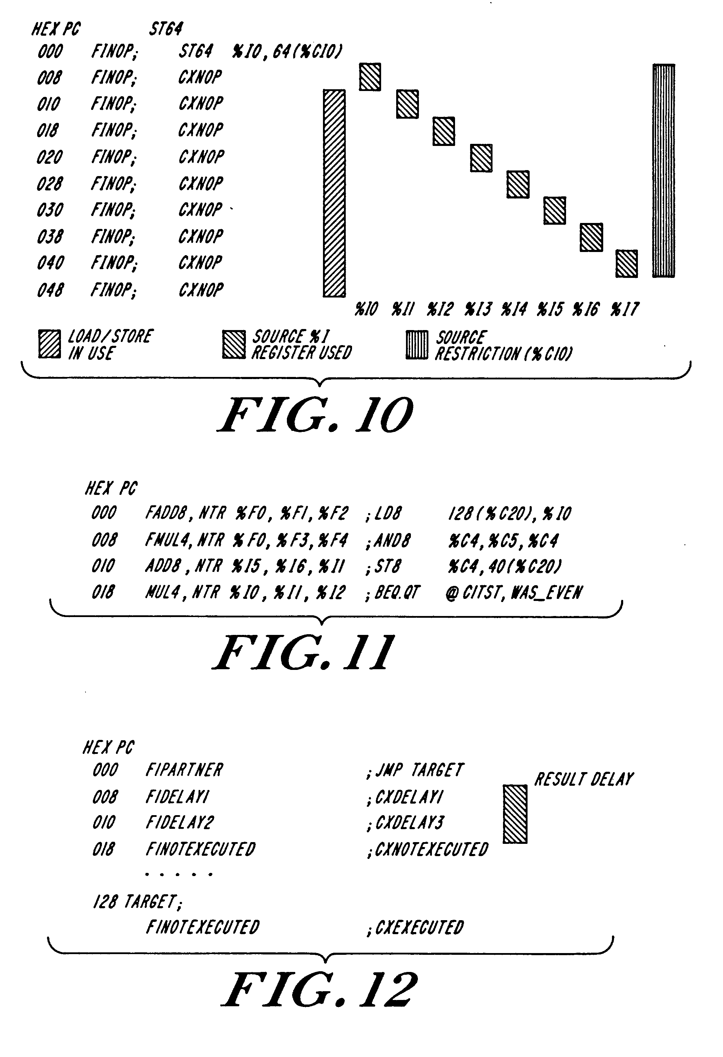

The CEU has only one resource which is subject to conflicts. This is the load/store resource, which is used by all LOAD, STORE, MOVB, MOVOUT and memory system instructions. All instructions except LD64 and ST64 (LOAD and STORE 64 bytes) use this resource only during their third cycle (i.e. with a delay of two). The LD64 and ST64 instructions use the load/store resource during the third through ninth cycle (delay two through eight). The resource usage of LD and MOVB instructions is depicted in FIG. 7, while FIG. 8 shows resource usage. The timing of a LD64 instruction is depicted in FIG. 9, and that of a ST64 instruction is shown in FIG. 10.

The IPU resources include a multiplier resource, which is used by the MUL and MULH instructions. Resources associated with the FPU include result, divider, adder and multiplier resources. The result resource is used by all of the FX instructions to deliver results into registers. This resource is not used by certain CX instructions -- LD, ST, LD64, ST64, MOVOUT, and MOVB -- which operate on FPU registers. It is used by MOVIN to a %f register.

The IPU divider resource is used in FDIV instructions, the IPU adder resource is employed in many floating point computational instructions, and the IPU multiplier resource is used in many of the floating point computational instructions. No resource conflicts are possible in the XIU.

In the description of instructions provided herein and in co-pending European application EP-A-0404560, resource usage is specified by giving the name of the resource, the number of cycles of delay before the resource is used and then the number of cycles for which it is used in a tabular format. Thus, the timing of a LD instruction would be described as:

| INSTR | CEU {A,B} Source | Load/Store Resource | Result Delay |
|---|---|---|---|
| ld | [0, 1, 0] | [2, 1] | 2 |

The timing for sources is a triple, specifying [delay, cycles, source restriction]. "Delay" is the number of cycles until the resources is used; it is counted from zero, commencing with the launch of the instruction. "Cycles" is the number of cycles the source is used, after the delay has expired. "Source restriction" is the number of cycles that the source should not be altered, counting after the delay has expired. "Result Delay" is the number of instructions which must occur between the instruction-pair and the first instruction which references the result.

Because some instructions require multiple cycles to complete or report exception status, the CEU maintains a co-execution PC for the FPU and for the IPU. If an exception occurs, the trap handler may need to examine the co-execution PC to determine the actual address of the failing instruction, as described in greater detail hereinafter. The CEU performs a similar function with load/store-type instructions so that ST64 instruction exceptions can be resolved.

If an instruction may trap, there must not be any operating instructions for the same unit in the instruction slots between the containing instruction pair and the instruction pair where the trap will be reported. This is called the trap PC restriction. It is possible to place an operating instruction in the instruction pair where the trap will be reported or in any instruction pair thereafter. The application of this restriction depends upon the needs of the operating system and the user application.

These coding practices ensure that an instruction sequence generates deterministic results, and that any exception which occurs can be resolved by system software or passed to the user program for analysis. In all cases, it is possible to determine exactly what operations were in progress, to correct a temporary condition such as a missing page, alter data, and finally restart the computation. The program must not violate the result register restriction or any resource restriction, and must not violate the source register restriction or functional unit trap PC restriction in any instruction sequence which might take a fault. This restriction does not apply to instruction sequences which will not take faults, either because the no trap modifier is used or the data parameters are known.

To maximize the number of instructions which are scheduled and minimize the number of FINOP and CXNOP instructions executed, several options are available. The program must not violate the result register restriction or any resource restriction. The program may ensure that data-dependent faults do not occur during FI-instructions, either by knowing the data or by using the no trap instruction modifier. In the latter case, the program may decide to examine various condition codes (such as @IOV) to determine whether or not an arithmetic error occurred. When no faults can occur, it is possible to violate the source register restriction and the functional unit trap PC restriction for FI instructions. It is also possible to violate these restrictions even when traps will occur if precise knowledge of the trapping instruction is not required. Whether or not the CEU source register restriction may be violated depends upon the system software, but typical implementations will not guarantee the results of such violations. FIG. 11 depicts an example of overlapped instructions which obey the rules for precise traps.

As discussed above, the CEU has three PCs which define the current instruction stream. A branch instruction will change the fetch PC (PC2) to the target value of the branch. A branch instruction may be a conditional branch (B** instruction), an unconditional JUMP (JMP or RTT instruction), or an unconditional subroutine jump (JSR instruction). Conditional branches allow the program to compare two CEU registers or a CEU register and a constant, or to examine a CEU condition code. The fetch PC is changed if the branch condition is satisfied, and simply incremented if the branch condition is not satisfied.

To trace the instruction-pairs executed by a program, it is necessary to trace the values of the three PCs as the program proceeds. A program may specify branch instructions in a branch delay. This technique is referred to herein as remote instruction execution, and is described in greater detail hereinafter. Any JMP, JSR or RTT instruction which changes the segment portion of PC2 may not have a "PC-relative" branch in its branch delay. A PC-relative branch is defined as any conditional branch or unconditional branch which specifies the program counter as its index register

A branch is always followed by two instructions in the processor pipeline. These instructions are called branch DELAY instructions. The branch delay is actually a special case of result register delay, where the result register of a branch happens to be PC0. For unconditional branches, these instructions are always executed. For conditional branches, their execution is controlled by the branch-quashing option of the branch instruction. Because branch instructions may occur in the branch delay slots of another branch, control by the branch-quashing option does not necessarily mean that the two instruction pairs which sequentially follow a branch in program memory are fetched or executed. This property is further discussed below.

There is no source register restriction, branch register restriction, or resource restriction for branch instructions. This is because the fetch PC is changed by the branch instruction, and any exception pertaining to the new fetch PC will be reported at the time that value has arrived at PC0, and the instruction-pair is being launched. For optimum performance, branch delays can be filled with instructions that logically belong before the branch but do not affect, and are not affected by, the branch itself. If no such instructions are available, the delay slots may be filled with NOPS.

A representative branch instruction is depicted in FIG. 12. The JMP instruction is fetched along with its partner. The partner begins execution. The two delay pairs are then fetched and begin execution. Then, the instruction pair at the target address is fetched and executed.

The programmer or compiler can fill the branch delay of an unconditional branch instruction with instructions preceding or after the branch itself. The branch delay of conditional branches can be harder to fill. In the best case, instructions preceding the branch can be put in the branch delay. These must be executed whether or not the branch is taken. However, instructions from before the branch are not always available to more into the branch delay. Filling the branch delay of conditional branches is simplified by branch-quashing. In particular, the conditional branch instructions allow the programmer to specify whether the branch delay instructions should be executed based on the result of the branch decision. The branch instruction can specify quash-on-true if the instructions are to be branch-quashed when the branch is taken, quash-on-false if they are to be branch-quashed when it is not taken, and quash-never if the instructions should always be executed. The assembler conditional branch mnemonics use the letters QT, QF, and QN, respectively, to indicate which branch-quashing semantics are required. Branch-quashing results in launch-quashing as the instructions in the branch delay arrive at PC0 and PC1.

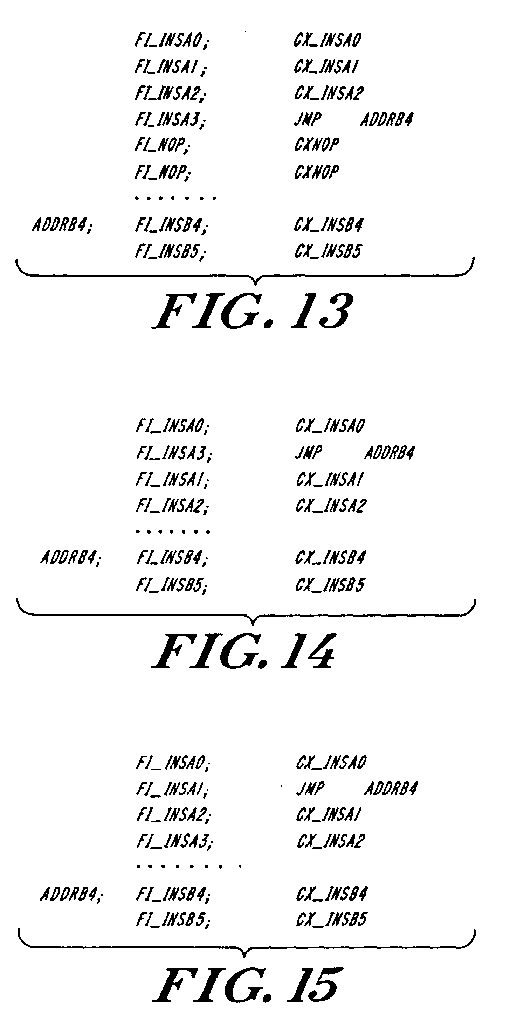

When instructions from before the branch are to be used in the branch delay, quash-never is specified. If no such instructions are available, the programmer can fill the delay with instructions from the target and choose quash-on-false, or from below the branch, selecting quash-on-true. The decision of which source to fill from depends on which instructions can easily be moved and upon prediction, at code generation time, of whether the branch is likely to be taken. Examples are shown in FIGS. 13-19.

FIGS. 13-15 depict an example of filled branch delay. In this example, code is moved from before a branch into the branch delay, thus removing two NOPS from the instruction stream. In particular, FIG. 13 depicts the original code sequence with NOPS in the branch delay. The instructions executed are FI_INSA0/CX_INSA0, FI_INSA1/CX_INSA1, FI_INSA2/CX_INSA2, FI_INSA3/jmp, FI_NOP/CXNOP, FI_NOP/CXNOP, FI_INSB4/CX_INSB4, FI_INSB5/CX_INSB5. This sequence results in 2 wasted cycles.

Alternatively, the optimized code sequence with filled branch delay depicted in FIG. 14 can be employed. As depicted therein, to fill the branch delay, instructions FI_INSA1/CX_INSA1 and FI_INSA2/CX_INSA2 are moved into the branch delay, saving two instruction cycles. The instructions executed are FI_INSA0/CX_INSA0, FI_INSA3/jmp, FI_INSA1/CX_INSA1, FI_INSA2/CX_INSA2, FI_INSB4/CX_INSB4, FI_INSB5/CX_INSB5, resulting in no wasted cycles. It is also possible to rearrange the FI instructions independent of the rearrangement of the CX instructions, as depicted in FIG. 15.

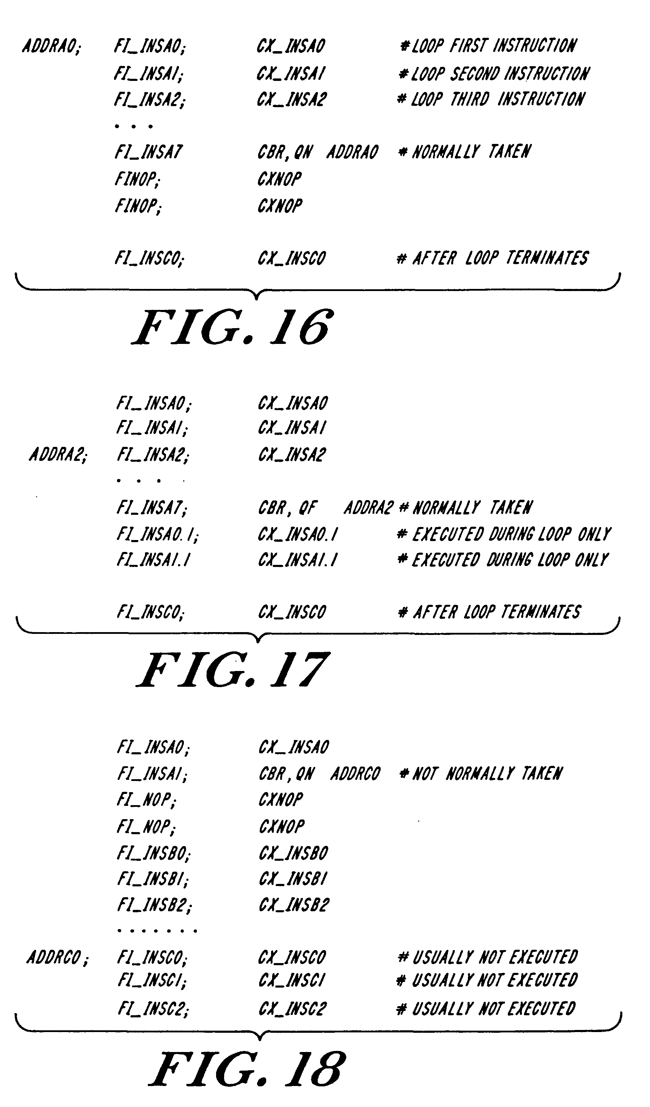

Certain programming constructions, such as the loop, make it likely that a branch will be taken. If the branch is most likely to be taken, the first two instructions from the branch target may be placed in the branch delay. Branch-quash on false is used to produce correct results should the branch not be taken. If the branch is indeed taken, two instruction cycles are saved. If not, the two cycles are branch-quashed and so program correctness preserved. FIG. 16 depicts a code sequence using NOPS in branch delay, while FIG. 17 depicts an optimized code sequence with target in branch delay and branch-quashing. Referring to FIG. 16, if the branch is not taken, the instructions executed are FI_INSA0/CX_INSA0, FI_INSA1/CX_INSA1, FI_INSA2/CX_INSA2, ..., FI_INSA7/CBR.QN, FINOP/CXNOP, FINOP/CXNOP, FI_INSC0/CX_INSC0, resulting in two wasted cycles. If the branch is taken the instructions executed are FI_INSA0/CX_INSA0, FI_INSA1/CX_INSA1, FI_INSA2/CX_INSA2, FI_INSA7/CBR.QN, FINOP/CXNOP, FINOP/CXNOP, FI_INSC0/CX_INSC0, resulting in two wasted cycles.

FIG. 17 illustrates that to fill the branch delay the user can copy the two instructions FI_INSA0/CX_INSA0 and FI_INSA1/CX_INSA1 into the branch delay, select branch-quash on false (branch taken), and adjust the branch target. If the branch is not taken, the instructions executed are FI_INSA0/CX_INSA0, FI_INSA1/CX_INSA1, FI_INSA2/CX_INSA2, ..., FI_INSA7/CBR.QF, branch-quashed, branch-quashed, FI_INSC0/CX_INSC0, resulting in two wasted cycles. If the branch is taken, the instructions executed are FI_INSA0/CX_INSA0, FI_INSA1/CX_INSA1, FI_INSA2/CX_INSA2, ..., FI_INSA7/CBR.OF, FI_INSAO.1/CX_INSA0.1, FI_INSA1/CX_INSA1.1, FI_INSA2/CX_INSA2, so that in the most likely case, no cycles are wasted.

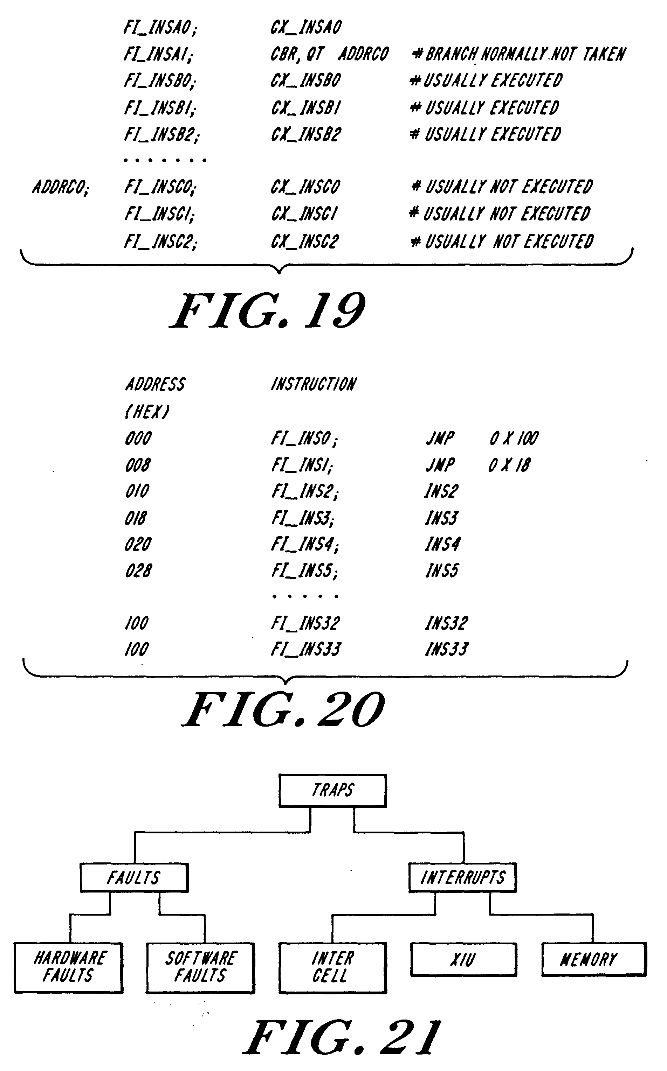

In some programs, certain branches are most likely to be skipped. One such branch is a test of a rarely set condition, such as arithmetic overflow. If the branch is most likely to be skipped, the first two instructions after the branch may be placed in the branch delay. Branch-quash-on-true is used to produce correct results should the branch be taken. If the branch is indeed not taken, two instruction cycles are saved. If not, the two cycles are branch-quashed and the execution time is not improved. An example of this is depicted in FIGS. 18 and 19.

FIG. 18 shows a code sequence having NOPS in the branch delay. If the branch is not taken, the instructions executed are FI_INSA0/CX_INSA0, FI_INSA1/CBR.QN, FINOP/CXNOP, FINOP/CXNOP, FI_INSB0/CX_INSB0, FI_INSB1/CX_INSB1, FI_INSB2/CX_INSB2, resulting in two wasted cycles. If the branch is taken, the instructions executed are FI_INSA0/CX_INSA0, FI_INSA1/CBR.QN, FINOP/CXNOP, FINOP/CXNOP, FI_INSC0/CX_INSC0, FI_INSC1/CX_INSC1, FI_INSC2/CX_INSC2, resulting in two wasted cycles.

FIG. 19 depicts an optimized code sequence with post branch instructions in branch delay and branch-quashing. As illustrated in FIG. 19, to fill the branch delay, the user can move instructions INSA1 and INSA2 into the branch delay and choose branch-quash on true, saving two instruction cycles when the branch is indeed not taken. If the branch is taken, the instructions executed are FI_INSA0/CX_INSA0, FI_INSA1/CBR.QT, branch-quashed, branch-quashed, FI_INSC0/CX_INSC0, FI_INSC1/CX_INSC1, FI_INSC2/CX_INSC2, resulting in two wasted cycles. If the branch is not taken, the instructions executed are FI_INSA0/CX_INSA0, FI_INSA1/CBR.QT, FI_INSB0/CX_INSB0, FI_INSB1/CX_INSB1, FI_INSB2/CX_INSB2, so that in the most likely case, there are no wasted cycles.

Because of the three PCs used for determining the instruction stream, it is possible to "remotely execute" one or two instructions which is not associated with the linear flow of a program. These operations can be executed with the type of sequence depicted in FIG. 20. The program sequence of FIG.1 20 executes the instruction pair at addresses 000, 008, 010, 100, 018, 020, etc. By moving the JMP from address 008 to address 0x10, two remote instructions pairs (at 100 and 108) are executed. These particular sequences do not support remote instructions which contain branches as CX instructions.

The transmission of interrupts and DMA inserts instructions into the processor pipeline between consecutive instructions of the instruction stream. These instructions are referred to herein as inserted-instructions. The CEU controls the "right" to insert instructions, and will occasionally ignore or quash an inserted instruction.

The architecture permits any instruction to be inserted, but the functional units can be designed so that only a limited part of the instruction set is used. These inserted instructions do not change the PCs. Inserted instructions use cycles, and allow the pipelines of all processing elements or functional units to advance, just as an ordinary instruction does.

The effect of inserted-instructions on the programming model is that an inserted-instruction may cause a result to appear earlier than expected. This is because the inserted-instruction occupies a physical pipeline stage, and a hidden cycle occurs. If the program obeys the result register restriction, there is no change to the logical execution of the program, only to the time required to execute it. Inserted-instructions cannot be quashed by branch-quashing or by launch-quashing state associated with the logical pipeline (PC0, PC1, PC2), but can be result-quashed or launch-quashed in the physical pipeline by an exception.

The following examples show how the CCU and XIU can employ inserted-instructions, further described in the Appendix filed herewith. The XADDR, XCACHE, XNOP, and XDATA instructions, and the subpage, subblock, and other memory operations set forth in the following examples are further described in Canadian Patent 2,019,300 filed this same date herewith, and in Canadian Patent 1,320,003, both incorporated herein by reference. The CCUs and XIU supply the CX portion of an instruction pair, and the CEU logically supplies an FINOP instruction. The CCUs and XIU manipulate processor busses at the same time that they insert an instruction to supply the operands of the instruction. The CCU and XIU insert two or more contiguous instructions.

### Flushing a Subpage from the Subcache:

xaddr
xaddr
xnop
xcache
xcache

### Loading or Storing Data, Unpipelined:

xaddr
xnop
xnop
xdata

### Loading or Storing Two Items (Each 8 bytes or less), Pipelined:

xaddr
xaddr
xnop
xdata
xdata

### Loading or Storing a Subblock:

xaddr
xaddr
xnop
xdata
xnop
xnop
xnop
xnop
xnop
xnop
xnop

### Requesting an Interrupt:

xtrap
xnop

The inserted-instructions can be coded as part of a program by diagnostic software. In a preferred embodiment of the invention, the CEU implements the FI instruction which accompanies the CX instruction. The program must take special action to supply or extract data as required. This can be accomplished, for example, by using MOVIN or MOVOUT instructions.

In a preferred embodiment of the invention, a trap mechanism is used to transfer control to privileged software in the event of interrupts and exceptions. The taxonomy of traps is shown in FIG. 21. As illustrated therein, a trap can be initiated in two basic ways: by a fault or by an interrupt. A fault is explicitly connected with the executing instruction stream, and occurs when certain combinations of data, states and instruction arise. An interrupt is an event in the system which is not directly related to the instruction stream.

Faults are further classified into software and hardware faults, respectively. Software faults are those faults which are part of the expected operation of the program, and may be caused by user or system software as part of implementing a computational model. Hardware faults can occur when unexpected errors are detected by the hardware as it operates. Preferably, the processor handles faults immediately, but can sometimes defer the handling of interrupts.

The most significant characteristic of the trap sequence is its ability to suspend execution and save the execution state of the processor so that software can restart execution in a manner which is transparent --i.e., "invisible"-- to the original program. Such sequences are made possible by the configuration of processor registers and restrictions described in Canadian Patent Application Serial No. 582,560, incorporated herein by reference. A program which violates the applicable restrictions, however, may suffer indeterminate results or the inability to resume an instruction stream after trap handling. The highest priority trap is referred to herein as a RESET. A RESET cannot be masked.

Between three and six PC values are required to specify the instructions in execution at the time of a trap. As discussed in greater detail in Canadian Serial No. 582,560 incorporated herein by reference, the CEU pipeline is described by PC0, PC1, and PC2. During a trap, these PCs are saved in CEU registers %TR0, %TR1, and %TR2 (also referred to as %C0, %C1, and %C2). The CEU maintains the addresses of the most recent operating FPU and IPU instructions. These addresses are called the co-execution PCs.

The co-execution PC for a given functional unit indicates the PC value of the last operating instruction launched by that unit, as long as that instruction is not result-quashed because an earlier instruction in any functional unit reported an exception. This mechanism, in conjunction with the Trap PC restriction, permits software to determine the exact instruction PC responsible for an exception, regardless of the result time of the instruction.

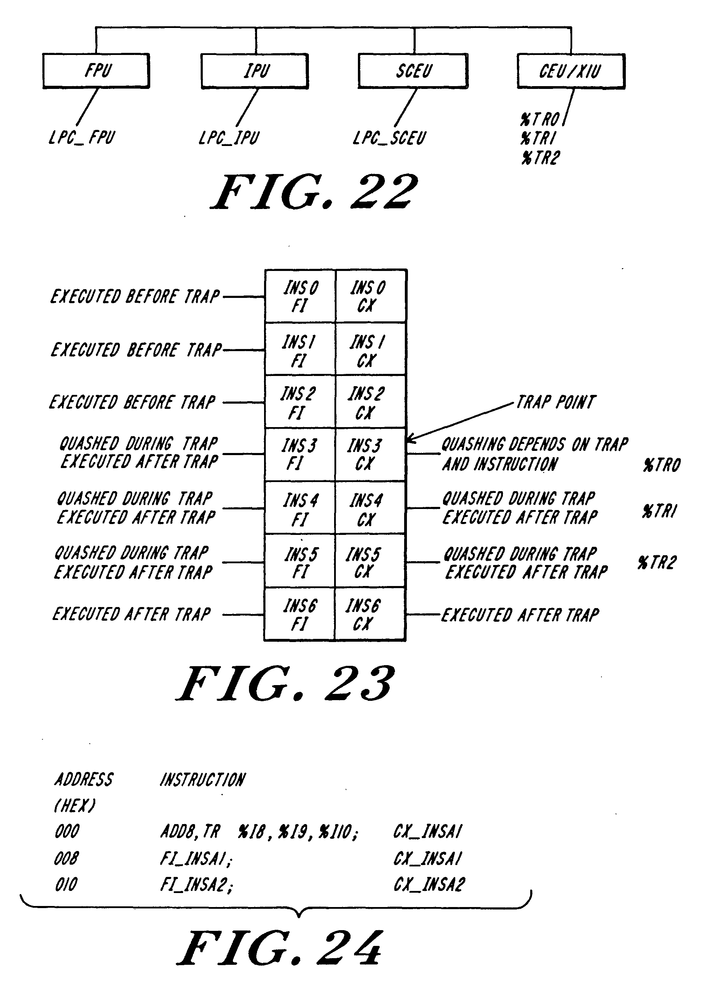

The execution point of the XIU is always described by PC0 at the time of the trap, since the XIU has no overlapping execution. During a trap, the co-execution PCs are saved in !PC_IPU and !PC_FPU indicated in FIG. 22. The CEU also provides !PC_SCEU to assist system software in handling faults which result from an ST64 instruction. The CEU and co-execution PCs are referred to collectively as the execution PCs, and are depicted in FIG. 22.

If an instruction executing in the FPU or IPU reports a trap and any operating instruction for the same unit was launched in the cycles between that launch and the current cycle, that unit reports an "imprecise exception." Otherwise the exception is referred to as "precise." In accordance with the invention, the instruction pair designated by PC0 may contain an instruction for the same unit without affecting the precision of the exception reported by that earlier instruction.

An exception is marked "imprecise" when the processor does not have enough information to precisely specify the state of the computation. If an operating instruction is present in the pipeline after the instruction which reports exception, there is no PC information for the trapping instruction, because the CEU has already updated the co-execution PC. If multiple exceptions are reported as part of a single trap, it is impossible to determine which instruction signalled which exception. Such computations cannot be meaningfully restarted, and the imprecise_exception flag is set to 1 in !I_TRAP and/or !F_TRAP, as appropriate.

The trap mechanism stores trap state values in various registers. These registers include the following:
- %TR0: stores the PC of the instruction at the trap point.
- %TR1: stores the PC of the first instruction after the trap point.
- %TR2: stores the PC of the instruction about to be fetched (second after the trap point).
- !CONTEXT: stores the context register of the suspended instruction stream.
- !TRAP: stores the trap register which records the causes of the trap.
- !PC_SCEU: stores the PC of the last LD or ST instruction launched which reported a trap, or of the last LD64 or ST64 instruction which was not launch-quashed and was not result-quashed by some other exception. If an STT or memory system fault is indicated in !TRAP, this register contains the PC of the offending instruction.
- !PC_FPU: stores the PC of the last operating FPU instruction launched which might have generated the current exception. This register is only valid if !TRAP indicates an FPU exception and !F_TRAP indicates the exception was precise.
- !F_TRAP: stores the FPU trap register which records any FPU exceptions.
- !PC_IPU: stores the PC of the last operating IPU instructions launched which might have generated the current exception. This register is only valid if !TRAP indicates an IPU exception and !I_TRAP indicates the exception was precise.
- !I_TRAP: stores details of the IPU exception, if an IPU exception is indicated in !TRAP.
- !X_TRAP: stores details of the XIU exception, if an XIU exception is indicated in !TRAP.

Upon entry into the trap handling software, the state of execution is specified by these registers. Additionally, the causes of the trap are indicated by the contents of these registers, which are more fully described in U.S. Patent 5,055,999 and U.S. Patent 5,251,308, incorporated herein by reference.

Gaps in the instruction stream can occur when a multi-cycle instruction signals an exception after cycle zero of execution. An instruction is launched when its address is present in PC0. In the nest cycle, the execution PCs are updated to describe the next three instructions to be executed. If that multi-cycle instruction reports a precise exception, its address is present in a co-execution PC (!PC_FPU, or !PC_IPU) or !PC_SCEU. The address of the instruction is lost if the program launches another operating instruction for the same unit in the result delay of that instruction.

After a trap occurs, system software may signal an error to the program or resolve the trap cause. To restart an instruction stream without gaps, the kernel executes a simple sequence which restores the execution PCs and register state. User or system software must complete any "dangling" instructions before the instruction stream can be restarted, as discussed in greater detail hereinafter.

A CEU gap can exist if a ST64 instruction reports an exception in its final cycle of execution. This is the only case where !PC_SCEU is valid (an STT or memory system exception occurred) but not equal to %TR0. The actual instruction was launched seven cycles before the instruction pair designated by PC0 when the trap occurs.

If multiple instruction are executing in the IPU or FPU when a trap occurs, the trap state of that unit is imprecise. Imprecise state cannot be meaningfully analyzed, so system software will typically signal an error to the user process and not allow the previous instruction stream to be restarted. If the trap state is precise, it is possible that the trap was caused by the instruction at the trap point (PC0/%TR0), or by an instruction launched before the trap point.

When the processor signals a trap, it establishes a trap point. The trap point is one of the PCs in the sequence of instruction pairs executed by the program. All instruction pairs before the trap point have completed or are allowed to complete. All instruction pairs after the trap point are not launched. The instruction pair at the trap point is treated specially, according to the sources of the trap and the instructions present.

For single cycle instructions which signal exceptions, the trap point is the PC of the trapping instruction. Some multi-cycle instructions report exceptions in cycle zero of execution, or at a later time. In many cases, the later trap point is the cycle before the result is available. The CEU reaches steady state, saves the execution state, and enters the trap handler, as described below.

When a trap is signalled, the processor stops fetching instruction, refuses to allow inserted instructions, and waits for all of the co-execution units to retire any instructions in progress. If any of these instructions report exceptions, each exception is included as part of the trap information. Each co-execution instruction may be retired by successfully completing its actions or by reporting an exception status and quashing its results. If an instructions does not report an exception status while completing, no further action will be required. If a retiring instruction launched before the instruction pair at PC0 reports an exception, that instruction represents a gap in the instruction stream before the trap point. Its status and address must be saved for the software to use in filling the gap.

The CEU handles the instruction pair at PC0 (the trap point) according to the launch-quashing state of the instruction stream, the trap source, and the CX instruction at PC0. Interrupts are generated, for example, when the XIU or a CCU inserts an XTRAP instruction into the instruction stream. An inserted instruction does not affect the program PCs; the XTRAP occurs before the instruction pair at PC0 is launched. Thus, if the trap was initiated by an interrupt (regardless of whether or not any functional unit reports a trap as part of reaching ready state), the instruction pair at PC0 is not launched. The instructions at PC0, PC1 and PC2 are result-quashed.

When the CEU updates the execution PCs (PC0, PC1, PC2), it attempts to fetch the instruction designated by PC2. It is possible that a fault will be signalled during address translation (STT violation) or while the CEU is obtaining the instruction subblock (e.g. page_fault). The error status is associated with the instruction pair, and follows it through the pipeline. If the instruction pair is result-quashed, the exception is not reported. Otherwise, the exception is reported, and the instructions at PC0, PC1 and PC2 are result-quashed.

If there is a trap reported by the CEU or XIU, the CX instruction at PC0 is result-quashed. A service request is treated as any other CEU instruction which reports a trap in cycle zero. If the FI instruction at PC0 was not already launch-quashed, it is result-quashed. The instructions at PC1 and PC2 are result-quashed.

The trap sequence result-quashes the FI instruction. If the CX instruction at PC0 is not a store-type instruction, it is result-quashed. If the CX instruction at PC0 CX is a store-type instruction, it is allowed to complete. The store-type instruction may complete normally, or report a trap. In the first case, PC0 CX is marked as launch-quashed. If the store-type instruction reports an exception, it becomes part of the trap state; the launch-quashing state is not changed. This behavior ensures that a store-type instruction only completes once.

The instructions at PC1 and PC2 are result-quashed. The cause or causes of the trap are saved in the trap registers. The CEU sets its trap register, !TRAP, to indicate the causes and sources of the trap. Each co-execution unit that reports an exception also sets its trap register -- !F_TRAP, !i trap, or !x-trap -- to further detail the exception it detected.

FIG. 23 shows the instruction execution model and the occurrence of a trap. If a program is using conditional branch quashing, it is important that this quashing state be preserved as part of trap state. Branch quashing state affects launch-quashing state. If an inserted XTRAP instruction causes a trap, the trap will occur before or after the conditional branch instruction. In the first case, the trap launch-quashes the conditional branch; if the instruction stream is restarted, the conditional branch is refetched and launched. In the second case, the branch-quashing state causes launch-quashing to be set for PC0 CX/FI and PC1 CX/FI, and then the inserted instruction (which is not logically associated with PC0) is executed and causes a trap. Thus, the saved launch-quashing state indicates that the two instruction pairs should be quashed if the instruction stream is restarted.

If an instruction before the conditional branch or the FI instruction paired with a conditional branch signals a trap, the conditional branch instruction will be result quashed, and launch-quashing is not affected. If the instruction stream is restarted, the conditional branch instruction pair will be re-launched, and branch-quashing will occur when the pipeline PCs are updated.

The trap sequence saves the state of the instruction stream in processor registers. The contents of these registers are described in U.S. Patent 5,055,999 and U.S. Patent 5,251,308, incorporated herein by reference. In order to protect these register values from being destroyed by another trap, the trap sequence disables further traps. The trap handling software will re-enable traps when the registers are safely stored in memory. In particular, to save the state of execution the hardware trap sequence disables further traps by setting !CONTEXT.TE = 0; stores PC0 (the trap point) in trap register 0 (%TR0); stores PC1 (the next PC) in trap register 1 (%TR1); stores PC2 (the instruction fetch PC) in trap register 2 (%TR2); modifies the context register, !CONTEXT, to save the privilege level, !CONTEXT.PL, in the old privilege level, !CONTEXT.OP; copies the launch-quashing state to !CONTEXT.QSH; and saves the current co-execution PCs and !PC_SCEU. The validity of !PC_FPU, and !PC_SCEU depend upon exception status reported by the individual functional units or processor elements.

The PCs stored in %TR0, %TR1, and %TR2 and the launch-quashing information saved in !CONTEXT define the instruction stream to be resumed. The trap register !TRAP indicates whether or not the instruction pair at PC0 (%TR0) caused an exception. The PCs stored in %TR1 and %TR2 are unrelated to the cause of the trap.

The co-execution unit PCs (!PC_FPU, !PC_IPU, and !pc_xiu) maintained in the CEU are only valid if the !TRAP control register indicates that the corresponding co-execution unit reported an exception. Finally, the processor must collect the information that describes the causes of the trap and store this in the trap registers, !TRAP, !F_TRAP, !X_TRAP, and !I_TRAP.

In the third stage of the trap sequence, the processor begins executing the trap handler, changing processor privilege level to the greatest privilege by setting !CONTEXT.pl = 0; clearing the launch-quashing state so that no instructions are quashed; and setting the PCs to cause sequential execution beginning at context address zero.

Except as noted above, the context of the previous instruction stream is inherited by the trap handler. System software must ensure that context address 0 is mapped by the ISTT of every executing context. The trap handler may choose to store the state and then change to some other context. Since the trap handler executes at privilege level 0, it has access to the kernel general registers, %C0 - %C3.

Since the trap handler inherits the context address space of whatever was executing when the trap occurred, every context address space must map the code and data segments that trap handler requires to start. The data mappings may be hidden from the user instruction stream by restricting access to level 0 only. The trap sequence takes the number of clocks needed to retire any co-execution instructions in progress plus three instruction cycles. Interrupts are not accepted during these cycles.

Faults are traps which are directly related to the instruction stream being executed. The KSR instruction, for example, is used to request an operating system service or debugging break point. System software defines an interface by which a program will pass information detailing the specific nature of its request. A service request has the same trapping characteristics as any other CX instruction which faults in cycle zero of execution. It is shown separately because restarting the instruction stream requires distinctive system software activity.

The KSR instruction is defined as a single-cycle instruction and traps in cycle zero of execution. A KSR instruction never completes normally. The address of the KSR is recorded in %TR0. The trap status indicates the service request and also indicates whether or not the paired FI instruction faulted. If the instruction stream is to be restarted, system software must alter quashing state so that the CX instruction is quashed. Note that this operation results in the FI instruction being completed after the service call completes.

An exception is signaled when any error is detected as the direct result of fetching or executing an instruction in the instruction stream. Exceptions include overflow of a data type, access violations, parity errors, and page faults. Exception causes are described by the !TRAP, !F_TRAP, !I_TRAP, and !X_TRAP registers.

Since multiple instructions are executed in parallel in the co-execution units, more than one exception can be signalled in the same cycle. When a trap is signalled, software must examine all the source flags in !TRAP to determine the sources of the trap. Individual units report additional status in their private trap registers.

When a CX instruction signals an exception in cycle zero of execution, it is quashed and the corresponding FI instruction is result-quashed. If the FI instruction or both of the instructions in a pair signals an exception in its first cycle of execution (cycle zero), the instruction pair is quashed and the trap point is that instruction pair, with the exception of a ST or ST64 instruction partner of an FPU or IPU instruction that signals an exception. Thus the saved state of execution is as it was before the exception occurred. The address of the instruction which caused the exception is stored in %TR0.

In the example set forth in FIG. 24, the add8 instruction has a result delay of zero, and will report an overflow in cycle zero of execution. The register value of %TR0 is 0, %TR1 is 8, %TR2 is 0x10. In addition, !PC_IPU is 0, and the exception is precise.

As described above, an exception signalled by an instruction after cycle zero of execution results in a gap in the instruction stream, indicated by the corresponding !pc register being unequal to %TR0. If the exception is imprecise, the PC register may or may not be different from %TR0, and will not indicate the instruction signalling the exception.

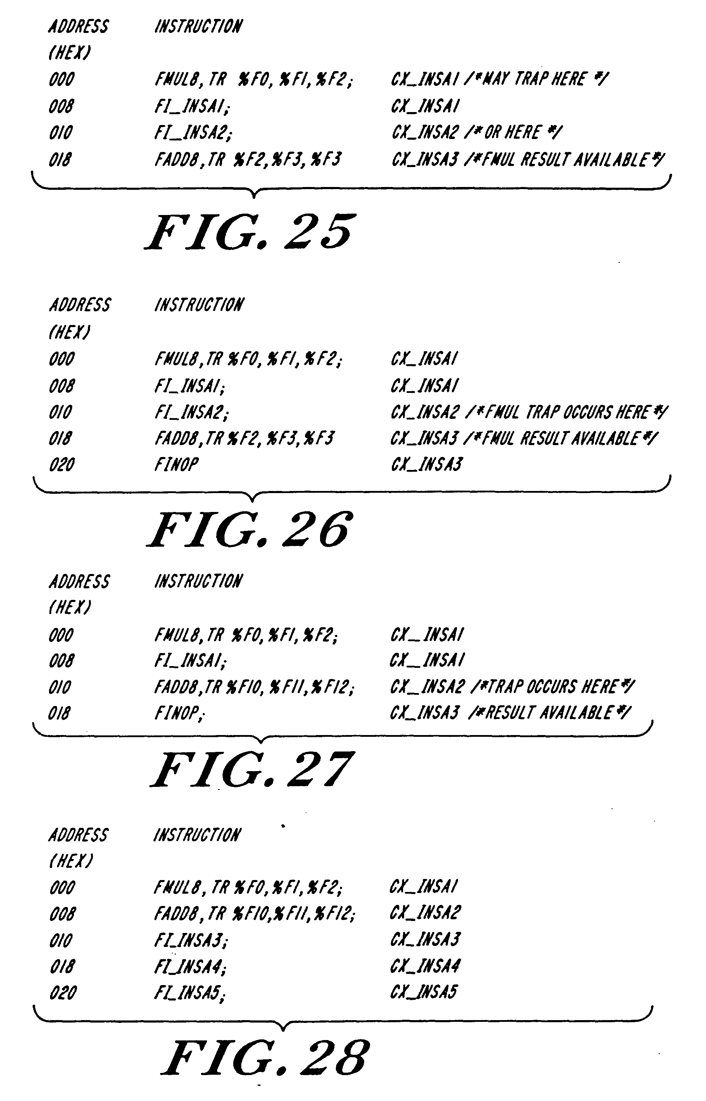

In the instruction sequence example set forth in FIG. 25, the FMUL instruction has a result delay of two, and may report a trap in cycle zero or cycle two of execution. If the exception is reported in cycle 0, then %TR0 is 0, %TR1 is 8, %TR2 is 0x10. The value of !PC_FPU is 0, and the exception is precise.

The example of overlapped execution depicted in FIG. 26 is similar to that of FIG. 25, but the previous example, but with data which causes the FMUL instruction to fault in cycle two. In this case, %TR0 is 0x10, %TR1 is 0x18, %TR2 is 0x20, !PC_FPU is 0. This exception is precise.

In the example set forth in FIG. 27, the FMUL again reports an exception in cycle two. Regardless of whether or not the instruction at 0x10 report an exception, %TR0 is 0x10, %TR1 is 0x18, %TR2 is 0x20, !PC_FPU is 0. This exception is precise.

In the instruction sequence example of FIG. 28, the FMUL instruction again reports an exception in cycle two. If the FADD instruction reports an exception in cycle zero, %TR0 is 8, %TR1 is 0x10, %TR2 is 0x18, !PC_FPU is 8; the exception is imprecise. Otherwise, %TR0 is 0x10, %TR1 is 0x18, %TR2 is 0x20, and !PC_FPU is 8; and the exception is imprecise.

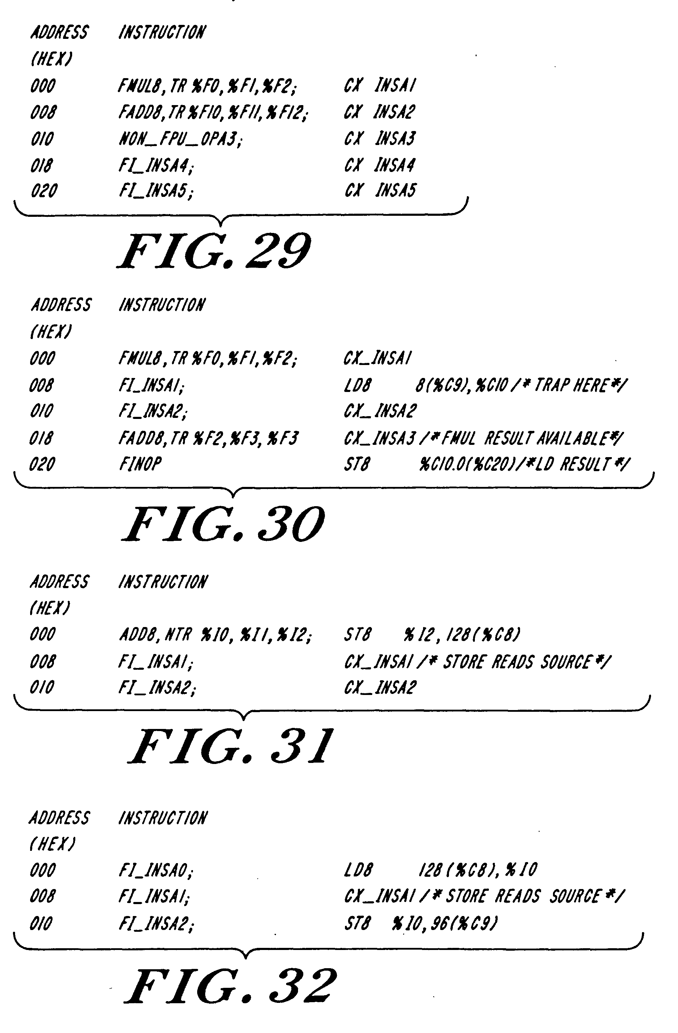

FIG. 29 depicts an instruction sequence in which data is such the FMUL instruction does not trap. If the FADD instruction reports an exception in cycle zero, %TR0 is 8, %TR1 is 0x10, %TR2 is 0x18, !PC_FPU is 8; the exception is precise. If the FADD instruction reports an exception in cycle two, %TR0 is 0x18, %TR1 is 0x20, %TR2 is 0x28. If the FI instruction at 0x10 is an operating FPU instruction, then the FADD exception is imprecise and !PC_FPU is 0x10. Otherwise the FADD exception is precise, and !PC_FPU is 8.

In the example illustrated in FIG. 30, the FMUL instruction has data which will not cause any fault. The CX instruction at 008 takes a trap in cycle zero (page_fault). The FPU quashes its launched instructions and the result of the FMUL is delivered to %f2. %TR0 is 8, %TR1 is 0x10, %TR2 is 0x18, !PC_FPU is not valid. The CEU exception is precise and !PC_SCEU is 8, indicating that a ST64 instruction was not the cause of the memory system fault.

The instruction sequence depicted in FIG. 31 takes advantage of the fact that store-type instructions have a one cycle delay before reading the source. This code sequence will only generate correct results if no trap can occur when the store instruction is addressed by PC0.

Although the result delay for a LOAD instruction is two cycles, it is similarly possible to compress the sequence if it is known that no fault can occur when the STORE instruction is addressed by PC0. The sequence shown in FIG. 32 is precise and restartable even if a CX faults occurs at address 0 or 0x10.

All LD, LD64 and ST instructions detect exceptions in cycle zero of execution. Thus, as STT or memory system fault (e.g. missing_segment, missing_page) is reported with %TR0 and !PC_SCEU set to the address of that instruction. The ST64 instruction may report an error in cycle zero (STT-related) or cycle seven (detected by memory system). Non-programmatic errors (such as parity errors) can occur at any time, and the value of %TR0 is not predictable.

The XIU and memory system can use inserted-instructions to request interrupts and perform direct memory access (DMA). In a preferred embodiment of the invention, these instructions do not cause a trap. Rather, each inserted instruction reports error status to its source. The source may then inform the CEU of the error with an interrupt. Inserted-instructions may be launch-quashed if some earlier instruction causes a trap.

Interrupts, as described above, are events which are not associated with the main instruction stream but require the attention of the processor. Interrupts may be generated by the memory system or the XIU while performing asynchronous activities. The generator delivers the interrupt to the CEU by inserting an XTRAP instruction. The CEU accepts only one interrupt at a time and may at times reject all interrupts. Interrupt sources are responsible for maintaining interrupts until CEU will accept them. The !TRAP control register will indicate the source of the interrupt.

Interrupts can include memory system interrupts, inter-cell interrupts, and XIU interrupts. A memory system interrupt is an interrupt generated by the memory system. A cache will generate interrupts whenever it detects errors in asynchronous operations it is executing, in the data it is maintaining, or in its view of the memory system. The priority of the memory interrupts is defined by the configuration location of the cell which detects it.

An inter-cell interrupt is a special case of the memory system interrupt, and occurs only as a result of a write to the CTL$CCU_CELL_INT control location of a cell. Because of the hierarchical layout of SPA space, processor's may direct interrupts to specific processors or to groups of processors at a level in the hierarchy.

An XIU interrupt is caused by time expiration of I/O completion. This aspect of I/O operations is described in greater detail in the Appendix filed herewith and incorporated herein by reference.

If an XTRAP (interrupt request) instruction is inserted in the instruction stream before any instruction which causes an exception, the interrupt is accepted and the instructions following it are launched-quashed. Moreover, if the XTRAP instruction is inserted in the pipeline and some preceding instruction causes a trap before the XTRAP is launched, the XTRAP is ignored, effectively rejecting the interrupt. Thus interrupt requests do not cause a double trap reset. When this occurs, the response to the asynchronous instruction which requested the interrupt will indicate that it was rejected.

When an interrupt is received, the normal trap sequence is initiated. This will cause all co-execution unit instructions to complete and report their exception status, if any. If any co-execution instruction reports an exception, the interrupt and exception status is merged and reported in !TRAP.

Additionally, when the trap sequence completes, a new instruction stream is started at context address 0. This code, executed at privilege level 0, is the software trap handler which completes the trap mechanism. Its job is to save the trap status stored in registers, dispatch control to the appropriate software to handle the trap, and later resume or abort the suspended instruction stream.

Traps are disabled by the trap sequence. A processor will take a double trap reset if another fault occurs before traps are enabled. However, XTRAP instructions inserted by the CCUs or XIU to signal an interrupt do not generate a trap while traps are disabled. If traps are re-enabled before the machine state is safely stored, that state may be overwritten by another trap, precluding restart analysis. Therefore, the system software trap handler preferably first saves trap state and then re-enable traps as quickly as possible. This minimizes the amount of system software which must be coded to avoid faults. The trap handler must examine !TRAP and determine which other register are valid.

Because the trap handler is executing in the context of the trapped previous instruction stream, it must also save any registers which it may disturb, such as !CONTEXT, !i_context, !f_context, and certain CEU/IPU/FPU general registers.

Certain traps require the system to respond to a condition and later resume the suspended instruction stream as if the trap had not occurred. Others will result in the instruction stream being abandoned or restarted at location other than where the trap occurred. These responses are collectively referred to herein as "resuming the instruction stream."

The trap handler begins at privilege level 0, where it must establish re-entrancy and then act upon the specific trap. System software can handle the trap at privilege level 0 and then resume the instruction stream. The trap status can also be passed to less privileged code by invoking a new instruction stream. That software handler can take corrective action and then make a service request to have the kernel restart the trapped instruction stream. System software or less privileged code can also decide to abandon the trapping instruction stream state and start a new instruction stream.

An important aspect of handling a trap involves filling the gaps in the instruction stream left by FPU, IPU, or ST64 instructions which reported exceptions. The need to fill gaps is the basis of the source register restriction described above. To handle these gaps, the software must "manually" execute the "dangling" instructions. In some cases, the instruction is effectively executed by changing its result register or memory. For example, a calculation which overflowed might be handled by setting the result register to the largest valid value.

It is also possible to change source values or machine state and re-execute the faulting instruction. An example of such modification and re-execution involves altering an arithmetic operation or making a page accessible. System software can establish a special context which launches the dangling instruction at its actual context address and immediately reinvokes the kernel.

An example of the special context has PC0 as the address of the dangling instruction, and PC1 and PC2 as the address of a KSR instruction (with a special operand code) in system software text space. The instruction paired with the dangling instruction has launch-quashing specified, and PC1 has launch-quashing clear. This context will launch the desired instruction. If the dangling instruction reports an exception in cycle zero of execution, a trap will occur immediately. Otherwise the ksr instruction is launched and causes a trap; if the dangling instruction was single-cycle, it has completed successfully. If the dangling instruction is multi-cycle, it may still report an exception as the processor reaches steady state, or it may complete normally.

When the kernel is re-entered, it examines trap status. If the dangling instruction completed successfully, the original trapped instruction stream can be restarted. Otherwise, system software must handle the new fault or abandon the instruction stream. If multiple dangling instructions are present in the original trapped instruction stream, they can be sequentially resolved using the above technique. System software must take precautions to ensure that users do not attempt to execute the special KSR instruction at inappropriate times.

Most of the context of a trapped instruction stream can be restored while traps are still enabled. For example, all FPU and IPU general registers, !f_context register, and most CEU registers are not used by the trap handler while traps are disabled. Assuming that the trap handler software implements a proper recursive model, any trap which occurs during the restoration of this state would eventually restore any state it changed. System software normally executes with traps enabled, but it must disable traps as the final part of resuming a trapped instruction stream. As when the trap handler was initially invoked, this is necessary to prevent a recursive trap from destroying state. Next, register !CONTEXT is restored. Finally, the trap PCs are reloaded into %TR0, %TR1, and %TR2 and the following code is executed:
- RTT 0(%TR0): /* enable traps, restore privilege level from !CONTEXT.OPL. Restore quashing from !CONTEXT.QSH (with two instruction delay). Branch to instruction pair at the trap point, designated by %TR0. */
- JMP 0(%TR1): /* jump to the first instruction after trap point. */
- JMP 0(%TR2): /* jump to the second instruction after trap point. */

This sequence will restore the state of the suspended instruction stream and start execution at the trap point as if no trap had occurred. The use of three consecutive branch instructions is in fact an example of the remote instruction technique described above. The changes of privilege level and trap enable by the RTT instruction take effect as the instruction at %TR0 is executed. The two JMP instructions have already been fetched from the segment which contains this code. All subsequent instruction fetches use the restored value of !CONTEXT.PL to detect privilege violations. The processor state is therefore restored just as the suspended code resumes execution. The conditions stored by the trap are restored explicitly before the return sequence and not modified by the sequence. The launch-quashing information restored by the RTT instruction control individual quashing of the first CX and FI instruction, and the quashing of the second instruction pair. This capability is necessary to enable interrupts to occur between a conditional branch and the instructions which it quashes, and to permit system software control over the first instruction pair being re-launched.

System software need not include special precautions with regard to the ISTT or memory system to ensure that the addresses at %TR0, %TR1, or %TR2 are accessible. This is because any exception pertaining to fetching those instructions is reported during the trap phase of that instruction. For example, if the page containing the addresses specified by %TR0 is missing, the instruction page fault will occur at that address.

When system software invokes a less-privileged fault handler, signal a user program, or start a new process, the software must start a new instruction stream. This can be accomplished by fabricating information equivalent to that saved by the trap handling software, and then resuming the execution of that "interrupted" instruction stream. This is the preferred technique for changing from kernel mode to user mode.

An embodiment of the invention efficiently attains the objects set forth above, among those made apparent from the preceding description. In particular, the invention provides multiprocessor methods and apparatus in which each processor can selectively assert instructions to other processing elements, thereby enhancing parallelism of execution and increasing processing speed.

It will be understood that changes may be made in the above construction and in the foregoing sequences of operation without departing from the scope of the invention. The invention can be practiced, for example, in connection with multiprocessor structures other than those depicted in FIG. 1. It is accordingly intended that all matter contained in the above description or shown in the accompanying drawings be interpreted as illustrative rather than in a limiting sense.

## Claims

1. Digital processing apparatus comprising
a set of interconnected processing elements (58, 60, 82, 84) , the set of processing elements including a first processing element,
the first processing element (58) including
fetch means for fetching instructions from a first instruction source, instructions fetched from the first instruction source forming an instruction stream, and
execution means for executing instructions,
at least one other of the processing elements including input/output processing means (60) for processing signals received from, and transmitted to, a peripheral device, the input/output processing means including insert means, the insert means being operable to respond to selected signals from the peripheral device to generate direct memory access , DMA, control instructions and to apply those DMA control instructions as inserted instructions to the first processing element to be processed thereby to at least initiate DMA transfers with said peripheral device,
the execution means processing both the instructions fetched from the first instruction source and the inserted instructions, the execution means executing the inserted instructions in the same manner as, and without affecting the sequence of, the instructions fetched from the first instruction source.

2. Apparatus according to claim 1, further comprising
instruction pipeline means for interconnecting the processing elements and the first instructions source for carrying the instructions, and
wherein the insert means includes means for applying one or more of the inserted-instructions to the instruction pipeline means.

3. Apparatus according to claim 1 or claim 2, wherein the inserted-instructions have the same format as the instructions from the first instruction source.

4. Apparatus according to claim 3, wherein the format includes a selected number of digital instruction bits, wherein at least a first set of the instruction bits form a first instruction field.

5. Apparatus according to claim 3, wherein the format includes a first set of digital instruction bits for specifying selected address signals, and a second set of digital instruction bits for specifying selected command signals.

6. Apparatus according to any preceding claim, wherein the first instruction source includes a memory element.

7. Apparatus according to claim 6, wherein the memory element includes an instruction cache element for storing digital values representative of instructions.

8. Apparatus according to claim 7, wherein
the first processing element includes an execution unit (CEU), the CEU including
means for asserting signals to the instruction cache element to cause instructions to be transmitted from the instruction cache element to said CEU.

9. Apparatus according to claim 7, wherein the instructions include cache management instructions inserted by the instruction cache element.

10. Apparatus according to claim 7, wherein the instruction cache element includes means for storing instructions representative of program steps.

11. Apparatus according to any preceding claim, wherein the input/output processing means includes a peripheral interface unit (XIU) for controlling signals received from, and transmitted by, a peripheral device.

12. Apparatus according to any preceding claim, wherein the input/output processing means includes graphics controller means for controlling signals transmitted to a display device.

13. Apparatus according to any preceding claim, wherein the input/output processing means includes text searching means for searching data structures representative of text.

14. Apparatus according to any preceding claim, wherein at least a selected one of the processing elements includes at least a first register element associated with that processing element for storing digital values representative of data and insert means that includes means for generating and applying to that selected processing element instructions to control movement of data into and out of at least the first register element.

15. Apparatus according to any preceding claim, wherein at least a selected one of the processing elements includes at least a first register element associated with that processing element for storing digital values representative of data and insert means that includes means for generating and applying to that selected processing element instructions to cause execution of selected logical operations on selected digital values stored in at least the first register element.

16. Apparatus according to any preceding claim, wherein at least one of said processing elements includes trap means, responsive to a trap signal, for initiating a trap sequence, the trap sequence including selected program steps to be executed in response to a trap signal and insert means that includes means for generating and applying to that processing element instructions for generating a trap signal.

17. Apparatus according to any preceding claim, wherein at least one of said processing elements includes interrupt means, responsive to an interrupt signal, for initiating an interrupt sequence, the interrupt sequence including selected program steps to be executed in response to an interrupt signal and insert means that includes means for generating and applying to that processing element instructions for initiating an interrupt sequence.

18. Apparatus according to claim 17, wherein said interrupt means includes means for generating a trap signal in response to an interrupt signal.

19. A method of operating a digital data processor including a set of interconnected processing elements (58, 60, 82, 84), the method comprising the steps of
a first processing element (58) fetching instructions in an instruction stream from a first instruction source,
at least one other of said processing elements including input/output processing means (60) for processing signals received from, and transmitted to, a peripheral device, the input/output processing means including insert means, the insert means responding to selected signals from said peripheral device to generate direct memory access (DMA) control instructions and applying those DMA control instructions as inserted instructions to the first processing element to be processed thereby to at least initiate DMA transfers with the peripheral device;
the first processing element processing both the instructions fetched from the first instruction source and the inserted instructions, the inserted instructions being executed in the same manner as, and without affecting the sequence of, the instructions fetched from the first instruction source.

## Patentansprüche

1. Digitale Verarbeitungsvorrichtung mit:
einem Satz miteinander verbundener Verarbeitungselemente (58, 60, 82, 84), wobei der Satz von Verarbeitungselementen ein erstes Verarbeitungselement umfaßt,
das erste Verarbeitungselement (58) aufweist:
eine Heranholeinrichtung für das Heranholen von Befehlen von einer ersten Befehlsquelle, wobei Befehle bzw. Anweisungen, die von der ersten Befehlsquelle herangeholt werden, einen Anweisungs- bzw. Befehlsstrom bilden, und
eine Ausführungseinrichtung für das Ausführen der Befehlen,
wobei zumindest ein weiteres der Verarbeitungselemente Eingabe-/Ausgabeverarbeitungseinrichtungen (60) für das Verarbeiten von Signalen umfaßt, die von einem peripheren Gerät empfangen oder zu diesem übermittelt werden, wobei die Eingabe-/Ausgabeverarbeitungseinrichtung eine Einfügungseinrichtung aufweist und die Einfügungseinrichtung in der Weise betreibbar ist, daß sie auf ausgewählte Signale von dem peripheren Gerät reagiert, um Direktspeicherzugriffs-, \DMA\-, -steuerbefehle zu erzeugen und diese DMA-Steuerbefehle als eingefügte Befehle für das erste Verarbeitungselement bereitzustellen, damit sie durch diese verarbeitet werden, um zumindest DMA-Übertragungen mit dem peripheren Gerät auszulösen,
wobei die Ausführungseinrichtung sowohl die Befehle, die von der ersten Befehlsquelle herangeholt wurden, als auch die eingefügten Befehle verarbeitet und wobei die Ausführungseinrichtung die eingefügten Befehle in derselben Art und Weise ausführt wie die von der ersten Befehlsquelle herangeholten Befehle, ohne deren Abfolge zu beeinflussen.

2. Vorrichtung nach Anspruch 1, welche weiterhin aufweist:
eine Befehlspipelineeinrichtung für das Verbinden der Verarbeitungselemente und der ersten Befehlsquelle für das Ausführen der Befehle, und
wobei die Einfügungseinrichtung eine Einrichtung zum Anwenden einer oder mehrerer der eingefügten Befehle auf die Befehlspipelineeinrichtung aufweist.

3. Vorrichtung nach Anspruch 1 oder 2, wobei die eingefügten Befehle dasselbe Format haben wie die Befehle aus der ersten Befehlsquelle.

4. Vorrichtung nach Anspruch 3, wobei das Format eine ausgewählte Anzahl digitaler Befehlsbits aufweist, wobei zumindest ein erster Satz der Befehlsbits ein erstes Befehlsfeld bilden.

5. Vorrichtung nach Anspruch 3, wobei das Format einen ersten Satz digitaler Befehlsbits aufweist, um ausgewählte Adreßsignale anzugeben, und einen zweiten Satz von digitalen Befehlsbits aufweist für das Angeben ausgewählter Befehlssignale.

6. Vorrichtung nach einem der vorstehenden Ansprüche, wobei die erste Befehlsquelle ein Speicherelement aufweist.

7. Vorrichtung nach Anspruch 6, wobei das Speicherelement ein Befehlscacheelement zum Speichern digitaler Werte aufweist, welche Befehlen entsprechen.

8. Vorrichtung nach Anspruch 7, wobei
das erste Verarbeitungselement eine Ausführungseinheit (CEU) aufweist, wobei die CEU umfaßt
eine Einrichtung zum Ausgeben von Signalen an das Befehlscacheelement, um zu bewirken, daß Befehle von dem Befehlscacheelement zu der CEU übertragen werden.

9. Vorrichtung nach Anspruch 7, wobei die Befehle Cacheverwaltungsbefehle umfassen, die durch das Befehlscacheelement eingefügt werden.

10. Vorrichtung nach Anspruch 7, wobei das Befehlscacheelement Einrichtungen zum Speichern von Befehlen umfaßt, die Programmschritten entsprechen.

11. Vorrichtung nach einem der vorstehenden Ansprüche, wobei die Eingabe/Ausgabeverarbeitungseinrichtung eine periphere Schnittstelleneinheit (XIU) für das Steuern von Signalen aufweist, die von einem Peripheriegerät empfangen und durch dieses gesendet werden.

12. Vorrichtung nach einem der vorstehenden Ansprüche, wobei die Eingabe/Ausgabeverarbeitungseinrichtung eine Grafiksteuereinrichtung aufweist, um Signale zu steuern, die zu einer Anzeigeeinrichtung übermittelt werden.

13. Vorrichtung nach einem der vorstehenden Ansprüche, wobei die Eingabe/Ausgabeverarbeitungseinrichtung eine Textsucheinrichtung zum Suchen von Datenstrukturen aufweist, welche Text entsprechen.

14. Vorrichtung nach einem der vorstehenden Ansprüche, wobei zumindest ein ausgewähltes der Verarbeitungselemente zumindest ein erstes Registerelement aufweist, welches diesem Verarbeitungselement zugeordnet ist, um digitale Werte zu speichern, die Daten entsprechen, sowie eine Einfügungseinrichtung aufweist, die Einrichtungen zum Erzeugen und Anwenden von Befehlen auf das ausgewählte Verarbeitungselement umfaßt, um die Bewegung von Daten in zumindest das erste Registerelement und aus diesem heraus zu kontrollieren.

15. Vorrichtung nach einem der vorstehenden Ansprüche, wobei zumindest ein ausgewähltes der Verarbeitungselemente zumindest ein erstes Registerelement aufweist, welches diesem Verarbeitungselement zugeordnet ist, um digitale Werte zu speichern, die Daten entsprechen, und eine Einfügungseinrichtung aufweist, welche Einrichtungen zum Erzeugen und Anwendungen von Befehlen auf das ausgewählte Verarbeitungselement umfaßt, um die Ausführung von ausgewählten Logikoperationen mit ausgewählten Datenwerten zu bewirken, die in zumindest dem ersten Registerelement gespeichert sind.

16. Vorrichtung nach einem der vorstehenden Ansprüche, wobei zumindest eines der Verarbeitungselemente eine Einrichtung für einen nicht programmierten Sprung aufweist, der auf ein Signal für einen nicht programmierten Sprung reagiert, um eine Sprungsequenz auszulösen, wobei die Sprungsequenz ausgewählte Programmschritte umfaßt, die in Reaktion auf ein Sprungsignal ausgeführt werden sollen, und mit einer Einfügungseinrichtung, welche Einrichtungen zum Erzeugen und Anwenden von Befehlen auf das Verarbeitungselement, um ein Signal für einen nicht programmierten Sprung zu erzeugen.

17. Vorrichtung nach einem der vorstehenden Ansprüche, wobei zumindest eines der Verarbeitungselemente eine Unterbrechungseinrichtung aufweist, welche auf ein Unterbrechungssignal (Interruptsignal) reagiert, um eine Unterbrechungssequenz auszulösen, wobei die Unterbrechungssequenz ausgewählte Programmschritte umfaßt, die in Reaktion auf ein Unterbrechungssignal ausgeführt werden sollen, und mit einer Einfügungseinrichtung, die Einrichtungen zum Erzeugen und Anwenden von Befehlen auf das Prozessorelement umfaßt, um eine Unterbrechungssequenz auszulösen.

18. Vorrichtung nach Anspruch 17, wobei die Unterbrechungseinrichtung Einrichtungen zum Erzeugen eines Signales für einen nicht programmierten Sprung in Reaktion auf ein Unterbrechungssignal aufweist.

19. Verfahren zum Betreiben eines digitalen Datenprozessors einschließlich eines Satzes von miteinander verbundenen Verarbeitungselementen (58, 60, 82, 84), wobei das Verfahren die Schritte aufweist:
Heranholen von Befehlen in Form eines Befehlsstromes von einer ersten Befehlsquelle durch ein erstes Verarbeitungselement (58),
wobei zumindest ein weiteres der Verarbeitungselemente Eingabe/Ausgabeverarbeitungseinrichtungen (60) zum Verarbeiten von Signalen aufweist, die von einem peripheren Gerät empfangen und an ein solches übermittelt werden, die Eingabe/Ausgabeverarbeitungseinrichtung eine Einfügungseinrichtung aufweist, die Einfügungseinrichtung auf ausgewählte Signale von dem peripheren Gerät reagiert, um Steuerbefehle für einen direkten Speicherzugriff (DMA) zu erzeugen, und diese DMA-Steuerbefehle als eingefügte Befehle auf das erste Verarbeitungselement anwendet, damit sie durch diese verarbeitet werden, um zumindest DMA-Übertragungen mit der peripheren Einrichtung auszulösen,
das erste Verarbeitungselement sowohl die Befehle, die von der ersten Befehlsquelle herangeholt werden als auch die eingefügten Befehle verarbeitet, wobei die eingefügten Befehle in derselben Art und Weise wie die von der ersten Befehlsquelle herangeholten Befehle ausgeführt werden und ohne die Abfolge der letzteren zu beeinflussen.

## Revendications

1. Dispositif de traitement numérique comprenant :
un ensemble d'éléments interconnectés (58, 60, 82, 84) de traitement, l'ensemble d'éléments de traitement incluant un premier élément de traitement ;
le premier élément (58) de traitement incluant :
un moyen d'extraction destiné à extraire des instructions d'une première source d'instructions, les instructions extraites de la première source d'instructions formant un flux d'instructions ; et
un moyen d'exécution destiné à exécuter des instructions ;
au moins un autre des éléments de traitement incluant un moyen (60) de traitement d'entrée/sortie, destiné à traiter des signaux reçus d'un dispositif périphérique et transmis à celui-ci, le moyen de traitement d'entrée/sortie incluant un moyen d'insertion, le moyen d'insertion étant utilisable pour répondre à des signaux choisis provenant du dispositif périphérique pour engendrer des instructions de commande d'accès direct à la mémoire, DMA, et pour appliquer ces instructions de commande de DMA, en tant qu'instructions insérées, au premier élément de traitement pour ainsi être traitées pour au moins lancer des transferts de DMA avec ledit dispositif périphérique ;
le moyen d'exécution traitant à la fois les instructions extraites de la première source d'instructions, et les instructions insérées, le moyen d'exécution exécutant les instructions insérées de la même manière que les instructions extraites de la première source d'instructions, et sans en affecter la séquence.

2. Dispositif selon la revendication 1, comprenant en outre :
un moyen formant pipeline d'instructions pour interconnecter les éléments de traitement et la première source d'instructions pour transporter les instructions ; et
dans lequel le moyen d'insertion comprend un moyen destiné à appliquer une ou plusieurs des instructions insérées au moyen formant pipeline d'instructions.

3. Dispositif selon la revendication 1 ou la revendication 2, dans lequel les instructions insérées ont le même format que les instructions provenant de la première source d'instructions.

4. Dispositif selon la revendication 3, dans lequel le format comprend un nombre choisi de bits d'instruction numérique, dans lequel au moins un premier ensemble des bits d'instruction forme une première zone d'instruction.

5. Dispositif selon la revendication 3, dans lequel le format comprend un premier ensemble de bits d'instruction numérique destiné à spécifier des signaux d'adresse choisis, et un second ensemble de bits d'instruction numérique destiné à spécifier les signaux d'instruction choisis.

6. Dispositif selon l'une quelconque des revendications précédentes, dans lequel la première source d'instructions comprend un élément de mémoire.

7. Dispositif selon la revendication 6, dans lequel l'élément de mémoire comprend un élément d'antémémoire d'instructions destiné à mémoriser des valeurs numériques représentant des instructions.

8. Dispositif selon la revendication 7, dans lequel :
le premier élément de traitement comprend un module d'exécution (CEU), le CEU incluant :
un moyen destiné à présenter des signaux à l'élément d'antémémoire d'instructions pour faire que des instructions soient transmises de l'élément d'antémémoire d'instructions audit CEU.

9. Dispositif selon la revendication 7, dans lequel les instructions comprennent des instructions de gestion d'antémémoire insérées par l'élément d'antémémoire d'instructions.

10. Dispositif selon la revendication 7, dans lequel l'élément d'antémémoire d'instructions comprend un moyen destiné à mémoriser des instructions représentatives des étapes de programme.

11. Dispositif selon l'une quelconque des revendications précédentes, dans lequel le moyen de traitement d'entrée/sortie comprend un module d'interface de périphérique (XIU) destiné à commander des signaux reçus d'un dispositif périphérique et transmis par celui-ci.

12. Dispositif selon l'une quelconque des revendications précédentes, dans lequel le moyen de traitement d'entrée/sortie comprend un moyen régisseur graphique destiné à commander des signaux émis vers un dispositif d'affichage.

13. Dispositif selon l'une quelconque des revendications précédentes, dans lequel le moyen de traitement d'entrée/sortie comprend un moyen de recherche de texte destiné à rechercher des structures de données représentatives du texte.

14. Dispositif selon l'une quelconque des revendications précédentes, dans lequel ledit au moins un, choisi, des éléments de traitement comprend au moins un premier élément formant registre associé à cet élément de traitement pour mémoriser des valeurs numériques représentatives des données et un moyen d'insertion qui comprend un moyen destiné à engendrer et à appliquer à cet élément de traitement choisi des instructions pour commander le déplacement de données en entrée et en sortie d'au moins le premier élément formant registre.

15. Dispositif selon l'une quelconque des revendications précédentes, dans lequel ledit au moins un, choisi, des éléments de traitement comprend au moins un premier élément formant registre associé à cet élément de traitement pour mémoriser des valeurs numériques représentatives des données et un moyen d'insertion qui comprend un moyen destiné à engendrer et à appliquer à cet élément de traitement choisi des instructions pour provoquer l'exécution d'opérations logiques choisies sur des valeurs numériques choisies mémorisées dans au moins le premier élément formant registre.

16. Dispositif selon l'une quelconque des revendications précédentes, dans lequel ledit au moins un desdits éléments de traitement comprend un moyen d'interception, sensible à un signal d'interception, pour lancer une séquence d'interception, la séquence d'interception incluant des étapes choisies de programme à exécuter en réponse à un signal d'interception et un moyen d'insertion qui comprend un moyen destiné à engendrer et à appliquer à cet élément de traitement des instructions pour engendrer un signal d'interception.

17. Dispositif selon l'une quelconque des revendications précédentes, dans lequel ledit au moins un desdits éléments de traitement comprend un moyen d'interruption, sensible à un signal d'interruption, pour lancer une séquence d'interruption, la séquence d'interruption incluant des étapes choisies de programme à exécuter en réponse à un signal d'interruption et un moyen d'insertion qui comprend un moyen destiné à engendrer et à appliquer à cet élément de traitement des instructions pour lancer une séquence d'interruption.

18. Dispositif selon la revendication 17, dans lequel ledit moyen d'interruption comprend un moyen destiné à engendrer un signal d'interception en réponse à un signal d'interruption.

19. Procédé de mise en oeuvre d'un processeur de données numériques incluant un ensemble d'éléments interconnectés (58, 60, 82, 84) de traitement, le procédé comprenant les étapes consistant :
à ce qu'un premier élément (58) de traitement extraie des instructions d'un flux d'instructions provenant d'une première source d'instructions ;
à ce qu'au moins un autre desdits éléments de traitement comprenne un moyen (60) de traitement d'entrée/sortie, destiné à traiter des signaux reçus d'un dispositif périphérique et transmis à celui-ci, le moyen de traitement d'entrée/sortie incluant un moyen d'insertion, à ce que le moyen d'insertion réponde à des signaux choisis provenant dudit dispositif périphérique pour engendrer des instructions de commande d'accès direct à la mémoire (DMA), et applique ces instructions de commande de DMA, en tant qu'instructions insérées, au premier élément de traitement pour ainsi être traitées pour au moins lancer des transferts de DMA avec le dispositif périphérique ;
le premier élément de traitement traitant à la fois les instructions extraites de la première source d'instructions, et les instructions insérées, les instructions insérées étant exécutées de la même manière que les instructions extraites de la première source d'instructions, et sans en affecter la séquence.
